(19) Europäisches Patentamt / European Patent Office / Office européen des brevets

(11) **EP 3 268 402 B1**

(12) **EUROPEAN PATENT SPECIFICATION**

(45) Date of publication and mention
of the grant of the patent:
**11.12.2019 Bulletin 2019/50**

(51) Int Cl.:
***C08F 297/04*** *(2006.01)*     ***C08J 5/18*** *(2006.01)*

(21) Application number: **16712597.0**

(86) International application number:
**PCT/US2016/021919**

(22) Date of filing: **11.03.2016**

(87) International publication number:
**WO 2016/145275 (15.09.2016 Gazette 2016/37)**

(54) **STYRENE-BUTADIENE BLOCK COPOLYMERS FOR TUBING APPLICATIONS**

STYROLBUTADIEN-BLOCKCOPOLYMERE FÜR ROHRANWENDUNGEN

COPOLYMÈRES À BLOCS STYRÈNE-BUTADIÈNE POUR TUYAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2015 US 201514645658**
**18.09.2015 US 201514857875**

(43) Date of publication of application:
**17.01.2018 Bulletin 2018/03**

(73) Proprietor: **INEOS Styrolution Group GmbH 60325 Frankfurt am Main (DE)**

(72) Inventors:
• **ZHOU, Jinping Joe**
**Bartlesville, Oklahoma 74006 (US)**
• **PACE, Walter**
**Pawhuska, Oklahoma 74056 (US)**
• **YOUNG, David**
**Caney, Kansas 67333 (US)**

(74) Representative: **Jacobi, Markus Alexander Patentanwälte**
**Isenbruck Bösl Hörschler PartG mbB**
**Eastsite One**
**Seckenheimer Landstraße 4**
**68163 Mannheim (DE)**

(56) References cited:
**EP-A1- 2 186 859     EP-A1- 2 407 512**
**WO-A1-01/94466**

**Description**

BACKGROUND OF THE INVENTION

Flexible PVC has been the material of choice for many applications due to its low cost and unique combination of properties. In applications such as flexible tubing for medical applications, flexible PVC has suitable strength, flexibility, and kink resistance, and yet is not too tacky or sticky. However, flexible PVC requires significant amounts of plasticizers, which depending upon the specific composition, are being replaced or phased out due to health concerns and PVC incineration by-product concerns.

It would be beneficial to have a non-PVC composition that has acceptable strength and flexibility, reduced tackiness, and improved kink resistance for use in medical tubing and other traditional PVC applications. Accordingly, it is to these ends that the present invention is directed.

SUMMARY OF THE INVENTION

This summary is provided to introduce a selection of concepts in a simplified form that are further described below in the detailed description. This summary is not intended to identify required or essential features of the claimed subject matter. Nor is this summary intended to be used to limit the scope of the claimed subject matter.

Conjugated diene monovinylarene block copolymers are disclosed and described herein, and such copolymers can comprise from about 35 phm to about 75 phm monovinylarene monomer (phm is the parts by weight per hundred parts of total monomer in the copolymer), and moreover, can comprise polymer chains containing a block structure having formula I:

$$S_1 - (S/B)_1 - (S/B)_2 \quad (I).$$

In formula I, $S_1$ can be a monoblock of the monovinylarene monomer, wherein $S_1$ can be from about 10 phm to about 45 phm of the copolymer; $(S/B)_1$ can be mixed block of the conjugated diene monomer and the monovinylarene monomer, wherein the monovinylarene monomer content can be from about 30 wt. % to about 80 wt. %, based on the total weight of $(S/B)_1$; and $(S/B)_2$ can be a mixed block of the conjugated diene monomer and the monovinylarene monomer, wherein the conjugated diene monomer content can be from about 70 wt. % to about 99 wt. %, based on the total weight of $(S/B)_2$. The copolymer can be further characterized by a kink resistance of tubing produced from the copolymer of less than or equal to about 32 mm, when tested in accordance with DIN EN 13868.

In certain embodiments consistent with this invention, the copolymer can have the following characteristics: a monovinylarene monomer content in a range from about 57 phm to about 67 phm, $S_1$ in a range from about 25 phm to about 38 phm, a monovinylarene monomer content in a range from about 40 wt. % to about 60 wt. % of $(S/B)_1$; and a conjugated diene monomer content in a range from about 72 wt. % to about 90 wt. % of $(S/B)_2$.

In particular embodiments, the copolymer can further comprise polymer chains containing a block structure having formula II:

$$S_2 - (S/B)_1 - (S/B)_2 \quad (II).$$

In formula II, $S_2$ can be a monoblock of the monovinylarene monomer, wherein $S_2$ can be from about 5 phm to about 30 phm, or from about 12 phm to about 25 phm. In formula II, $(S/B)_1$ and $(S/B)_2$ can be the same as, or different from, that described herein for formula I.

In accordance with another embodiment of this invention, a conjugated diene monovinylarene block copolymer comprising from about 35 phm to about 70 phm monovinylarene monomer is disclosed and described herein, and in this embodiment, the block copolymer can comprises polymer chains with the following structures: X-X, X-Y, and Y-Y; wherein X is $S^1$ - $S^2$ - $(S/B)^1$ - $(S/B)^2$ - $T^1$ -, and Y is $S^2$ - $(S/B)^1$ - $(S/B)^2$ - $T^1$ -. In these formulas, $S^1$ and $S^2$ can be monoblocks of the monovinylarene monomer, wherein a total weight of $S^1$ and $S^2$ can be from about 17 wt. % to about 58 wt. % (or from about 35 wt. % to about 45 wt. %) of X, and $S^2$ can be from about 11 wt. % to about 30 wt. % (or from about 14 wt. % to about 26 wt. %) of Y. $(S/B)^1$ can be a mixed block of the conjugated diene monomer and the monovinylarene monomer, wherein the monovinylarene monomer content of $(S/B)^1$ can be from about 30 wt. % to about 80 wt. %; $(S/B)^2$ can be a mixed block of the conjugated diene monomer and the monovinylarene monomer, wherein the monovinylarene monomer content of $(S/B)^2$ can be from about 30 wt. % to about 80 wt. %; and $T^1$ can be a mixed block of the conjugated diene monomer and the monovinylarene monomer, wherein the conjugated diene monomer content

of $T^1$ can be at least about 70 wt. %, or a monoblock of the conjugated diene monomer, wherein the conjugated diene monomer content of $T^1$ is 100 wt. %. Further, $T^1$ can be from about 10 to about 30 wt. % of X, and $T^1$ can be from about 14 to about 30 wt. % of Y. Additionally, the copolymer can be further characterized by a kink resistance of tubing produced from the copolymer of less than or equal to about 32 mm, when tested in accordance with DIN EN 13868.

Articles can be produced from and/or can contain the block copolymers (or compositions comprising the block copolymers) disclosed herein. Representative articles can include sheet products, film products, tubing products, and adhesive products.

Embodiments of the invention also are directed to methods for producing block copolymers. One such method can comprise contacting (i) a first initiator and a first charge of the monovinylarene monomer and allowing polymerization to occur until minimal free monomer is present; thereafter contacting all products of step (i) with (ii) a second initiator and a second charge of the monovinylarene monomer and allowing polymerization to occur until minimal free monomer is present; thereafter contacting all products of step (ii) with (iii) a first mixture of the monovinylarene monomer and the conjugated diene monomer and allowing polymerization to occur until minimal free monomer is present; thereafter contacting all products of step (iii) with (iv) a second mixture of the monovinylarene monomer and the conjugated diene monomer and allowing polymerization to occur until minimal free monomer is present; thereafter contacting all products of step (iv) with (v) a third mixture of the monovinylarene monomer and the conjugated diene monomer and allowing polymerization to occur until minimal free monomer is present; thereafter contacting all products of step (v) with (vi) a coupling agent.

Another process for producing a kink-resistant conjugated diene monovinylarene block copolymer comprising from about 35 phm to about 70 phm monovinylarene monomer is provided herein, and this process can comprise sequentially contacting under polymerization conditions (i) a first initiator charge and a first charge of the monovinylarene monomer; (ii) a second initiator charge and a second charge of the monovinylarene monomer; (iii) a first dual charge of the monovinylarene monomer and the conjugated diene monomer, wherein the monovinylarene monomer content of the first dual charge can be from about 30 wt. % to about 80 wt. %; (iv) optionally, a second dual charge of the monovinylarene monomer and the conjugated diene monomer, wherein the monovinylarene monomer content of the second dual charge can be from about 30 wt. % to about 80 wt. %; (v) a final charge of the monovinylarene monomer and the conjugated diene monomer, wherein the conjugated diene monomer content of the final charge can be at least about 70 wt. %, or a final charge of the conjugated diene monomer, wherein the conjugated diene monomer content of the final charge is 100 wt. %; and (vi) a coupling agent. Generally, the first charge and the second charge can comprise a total of from about 10 phm to about 45 phm of the monovinylarene monomer, and the kink resistance of tubing produced from the copolymer and tested in accordance with DIN EN 13868 can be less than or equal to about 32 mm.

Consistent with embodiments of this invention, a kink-resistant conjugated diene monovinylarene block copolymer comprising from about 35 phm to about 70 phm monovinylarene monomer can be formed by the following charge sequence:

$$i_1 - S_J - i_2 - S_K - (S/B)_J - (S/B)_K - T - CA \qquad (A).$$

In formula (A), $i_1$ can be a first initiator charge; $S_J$ can be a first charge of the monovinylarene monomer; $i_2$ can be a second initiator charge; $S_K$ can be a second charge of the monovinylarene monomer; $(S/B)_J$ can be a first dual charge of the conjugated diene monomer and the monovinylarene monomer, wherein the monovinylarene monomer content of $(S/B)_J$ can be from about 30 wt. % to about 80 wt. %; $(S/B)_K$ can be a second dual charge of the conjugated diene monomer and the monovinylarene monomer, wherein the monovinylarene monomer content of $(S/B)_K$ can be from about 30 wt. % to about 80 wt. %; T can be a final charge of the conjugated diene monomer and the monovinylarene monomer, wherein the conjugated diene monomer content of T can be at least about 70 wt. %, or a final charge of the conjugated diene monomer, wherein the conjugated diene monomer content of T is 100 wt. %; and CA can be a coupling agent charge. Typically, the first charge and the second charge can comprise a total of from about 10 phm to about 45 phm of the monovinylarene monomer, and the kink resistance of tubing produced from the copolymer and tested in accordance with DIN EN 13868 can be less than or equal to about 32 mm

Both the foregoing summary and the following detailed description provide examples and are explanatory only. Accordingly, the foregoing summary and the following detailed description should not be considered to be restrictive. Further, features or variations may be provided in addition to those set forth herein. For example, certain embodiments may be directed to various feature combinations and sub-combinations described in the detailed description.

BRIEF DESCRIPTION OF THE FIGURE

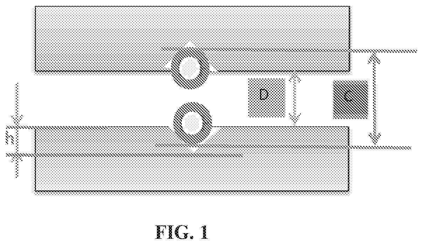

FIG. 1 presents a schematic of the apparatus used to determine the kink resistance and re-kink resistance of tubing, as described herein.

DEFINITIONS

To define more clearly the terms used herein, the following definitions are provided. Unless otherwise indicated, the following definitions are applicable to this disclosure. If a term is used in this disclosure but is not specifically defined herein, the definition from the IUPAC Compendium of Chemical Terminology, 2nd Ed (1997), can be applied, as long as that definition does not conflict with any other disclosure or definition applied herein, or render indefinite or non-enabled any claim to which that definition is applied. To the extent that any definition or usage provided by any document incorporated herein by reference conflicts with the definition or usage provided herein, the definition or usage provided herein controls.

While compositions and methods are described in terms of "comprising" various components or steps, the compositions and methods can also "consist essentially of" or "consist of" the various components or steps, unless stated otherwise. For example, a composition provided in an embodiment of the invention can comprise, or alternatively, consist essentially of, or alternatively, consist of, a block copolymer, a second polymer, and an additive.

The terms "a," "an," and "the" are intended to include plural alternatives, e.g., at least one. For instance, the disclosure of "a conjugated diene monovinylarene block copolymer," "an additive," etc., is meant to encompass one, or mixtures or combinations of more than one conjugated diene monovinylarene block copolymer, additive, etc., unless otherwise specified.

The term "polymer" is used herein generically to include homopolymers, copolymers, terpolymers, and so forth, while a "copolymer" is used generically to include copolymers, terpolymers, and so forth. Thus, "polymer" and "copolymer" encompass polymeric materials derived from any monomer and comonomer (one or more than one) disclosed herein. As would be readily recognized by those of skill in the art, block copolymers in accordance with this invention contain a mixture of polymer chains of various sizes (e.g., a distribution of molecular weights), and the respective polymer chains can vary compositionally (e.g., relative amounts of conjugated diene monomer versus monovinylarene monomer).

As used herein, a "conjugated diene monomer" refers to an organic compound containing conjugated carbon-carbon double bonds and often a total of 4 to 12 carbon atoms, such as from 4 to 8 carbon atoms. Exemplary conjugated diene monomers can include, but are not limited to, 1,3-butadiene, 2-methyl-1,3-butadiene (isoprene), 2-ethyl-1,3-butadiene, 2,3-dimethyl-1,3-butadiene, 1,3-pentadiene, 3-butyl-1,3-octadiene, and the like, as well as mixtures thereof. For example, in some embodiments disclosed herein, the conjugated diene monomer can be a butadiene, while in other embodiments, the conjugated diene monomer can be 1,3-butadiene.

A unit of a polymer, wherein the unit is derived from polymerization of a conjugated diene monomer, can be referred to as a "conjugated diene unit."

As used herein, "monovinylarene monomer" refers to an organic compound containing a single carbon-carbon double bond, at least one aromatic moiety, and often a total of 8 to 18 carbon atoms, such as from 8 to 12 carbon atoms. Exemplary monovinylarene monomers can include, but are not limited to, styrene, alpha-methylstyrene, 2-methylstyrene, 3-methylstyrene, 4-methylstyrene, 2-ethylstyrene, 3-ethylstyrene, 4-ethylstyrene, 4-n-propylstyrene, 4-t-butylstyrene, 2,4-dimethylstyrene, 4-cyclohexylstyrene, 4-decylstyrene, 2-ethyl-4-benzylstyrene, 4-(4-phenyl-n-butyl)styrene, 1-vinylnaphthalene, 2-vinylnaphthalene, diphenylethylene, and the like, as well as mixtures thereof. For example, in some embodiments disclosed herein, the monovinylarene monomer can be styrene.

A unit of a polymer, wherein the unit is derived from polymerization of a monovinylarene monomer, can be referred to as a "monovinylarene unit."

A "conjugated diene monovinylarene block copolymer" is a polymer comprising polymer chains containing monovinylarene monomer units and conjugated diene monomer units. For example, in some embodiments disclosed herein, the conjugated diene monovinylarene block copolymer can be a styrene butadiene copolymer. The conjugated diene monovinylarene block copolymer comprises more than one block, wherein each block comprises monovinylarene monomer units and/or conjugated diene monomer units. If the block comprises only one type of monomer unit, it can be termed a "monoblock." If the block comprises both, it can be termed a "mixed" block. Exemplary mixed blocks can include, but are not limited to, random blocks, tapered blocks, stepwise blocks, or any other type of mixed block.

A mixed block is "tapered" when both (a) the mole fraction of conjugated diene units in a first section of the block is higher than the mole fraction of conjugated diene units in a second section of the block, wherein the second section of the block is closer to a given end of the block, and (b) condition (a) is true for substantially all sections of the block. Depending on the size of the sections being considered, condition (a) may not be true for all sections, but if so, will be not true at no more than about the level expected by chance.

A mixed block is "random" when the mole fractions of conjugated diene units and monovinylarene units in a section of the block are substantially the same as the mole fractions of conjugated diene units and monovinylarene units in the entire block. This does not preclude the possibility of sections of the block having regularity (i.e., appearing non-random), but such regular sections will typically be present at no more than about the level expected by chance.

Although any methods and materials similar or equivalent to those described herein can be used in the practice or testing of the invention, the typical methods and materials are herein described.

All publications and patents mentioned herein are incorporated herein, in their entirety, by reference for the purpose of describing and disclosing, for example, the constructs and methodologies that are described in the publications, which might be used in connection with the presently described invention. The publications discussed throughout the text are provided solely for their disclosure prior to the filing date of the present application. Nothing herein is to be construed as an admission that the inventors are not entitled to antedate such disclosure by virtue of prior invention.

Applicants disclose several types of ranges in the present invention. When Applicants disclose or claim a range of any type, Applicants' intent is to disclose or claim individually each possible number that such a range could reasonably encompass, including end points of the range as well as any sub-ranges and combinations of sub-ranges encompassed therein. A representative example follows for the kink resistance of tubing produced from block copolymers in embodiments of this invention. For example, by a disclosure that the kink resistance is in a range from about 10 mm to about 25 mm, Applicants intend to recite that the kink resistance can be any kink resistance in the range and can be equal to, for instance, about 10, about 11, about 12, about 13, about 14, about 15, about 16, about 17, about 18, about 19, about 20, about 21, about 22, about 23, about 24, or about 25 mm. Additionally, the kink resistance can be within any range from about 10 to about 25 mm (for example, the kink resistance can be in a range from about 10 to about 20 mm), and this also includes any combination of ranges between about 10 and about 25 mm. Likewise, all other ranges disclosed herein should be interpreted in a manner similar to this representative example.

Applicants reserve the right to proviso out or exclude any individual members of any such group, including any sub-ranges or combinations of sub-ranges within the group, that can be claimed according to a range or in any similar manner, if for any reason Applicants choose to claim less than the full measure of the disclosure, for example, to account for a reference that Applicants may be unaware of at the time of the filing of the application. Further, Applicants reserve the right to proviso out or exclude any individual substituents, analogs, compounds, ligands, structures, or groups thereof, or any members of a claimed group, if for any reason Applicants choose to claim less than the full measure of the disclosure, for example, to account for a reference that Applicants may be unaware of at the time of the filing of the application.

DETAILED DESCRIPTION OF THE INVENTION

The present disclosure is directed generally to new conjugated diene monovinylarene block copolymers, methods for making these block copolymers, and articles produced using these block copolymers. Unexpectedly, the kink resistance and other characteristics of these block copolymers make them suitable to replace flexible PVC in many end-use applications.

CONJUGATED DIENE MONOVINYLARENE BLOCK COPOLYMERS

Some embodiments of this invention are directed to conjugated diene monovinylarene block copolymers which can comprise from about 35 phm to about 75 phm monovinylarene monomer, and further, can comprise polymer chains containing a block structure having formula I:

$$S_1 - (S/B)_1 - (S/B)_2 \qquad (I).$$

In formula I, $S_1$ can be a monoblock of the monovinylarene monomer, wherein $S_1$ can be from about 10 phm to about 45 phm; $(S/B)_1$ can be a mixed block of the conjugated diene monomer and the monovinylarene monomer, wherein the monovinylarene monomer content can be from about 30 wt. % to about 80 wt. %, based on the total weight of $(S/B)_1$; and $(S/B)_2$ can be a mixed block of the conjugated diene monomer and the monovinylarene monomer, wherein the conjugated diene monomer content can be from about 70 wt. % to about 99 wt. %, based on the total weight of $(S/B)_2$. The abbreviation "phm" means parts by weight per hundred parts of total monomer in the copolymer. The block copolymer also can have a kink resistance of tubing produced from the copolymer of less than or equal to about 32 mm, determined using the test method described herein.

Generally, the features of any of these copolymers (e.g., the phm monovinylarene content in the copolymer, the block structure having formula I, the phm monovinylarene content in $S_1$, the monovinylarene monomer content in $(S/B)_1$, the conjugated diene monomer content in $(S/B)_2$, the kink resistance of the copolymer, among others) are independently described herein, and these features can be combined in any combination to further describe the disclosed copolymers.

Consistent with certain embodiments of this invention, the monovinylarene monomer content of the conjugated diene monovinylarene block copolymers disclosed herein often can be in a range from about 46 phm to about 72 phm, from about 50 phm to about 70 phm, or from about 52 phm to about 68 phm. In further embodiments, the monovinylarene monomer content, based on the conjugated diene monovinylarene block copolymer, can be in a range from about 58 phm to about 68 phm, from about 57 phm to about 67 phm, or from about 55 phm to about 65 phm.

In an embodiment, $S_1$ (the monoblock of the monovinylarene monomer) can be in a range from about 15 phm to about 43 phm, from about 18 phm to about 42 phm, or from about 20 phm to about 40 phm. In another embodiment, $S_1$, based on the conjugated diene monovinylarene block copolymer, can be in a range from about 20 phm to about 35 phm, from about 25 phm to about 38 phm, or from about 25 phm to about 35 phm.

In an embodiment, the monovinylarene monomer content in $(S/B)_1$ can be in a range from about 40 wt. % to about 80 wt. %, from about 40 wt. % to about 75 wt. %, or from about 40 wt. % to about 70 wt. %. In another embodiment, the monovinylarene monomer, based on the weight of $(S/B)_1$, can be in a range from about 35 wt. % to about 65 wt. %, from about 40 wt. % to about 60 wt. %, from about 40 wt. % to about 55 wt. %, or from about 45 wt. % to about 60 wt. %.

In an embodiment, the conjugated diene monomer content in $(S/B)_2$ can be in a range from about 70 wt. % to about 98 wt. %, from about 75 wt. % to about 98 wt. %, or from about 70 wt. % to about 95 wt. %. In another embodiment, the conjugated diene monomer, based on the weight of $(S/B)_2$, can be in a range from about 75 wt. % to about 95 wt. %, from about 72 wt. % to about 90 wt. %, or from about 70 wt. % to about 85 wt. %.

An illustrative and non-limiting example of a conjugated diene monovinylarene block copolymer of the present invention can have formula I and the following characteristics: a monovinylarene monomer content in a range from about 57 phm to about 67 phm, $S_1$ in a range from about 25 phm to about 38 phm, a monovinylarene monomer content of $(S/B)_1$ in a range from about 40 wt. % to about 60 wt. %, and a conjugated diene monomer content of $(S/B)_2$ in a range from about 72 wt. % to about 90 wt. %. Another illustrative and non-limiting example of a conjugated diene monovinylarene block copolymer of the present invention can have formula I and the following characteristics: a monovinylarene monomer content in a range from about 55 phm to about 65 phm (or from about 58 phm to about 68 phm), $S_1$ in a range from about 25 phm to about 35 phm (or from about 28 to about 38 phm), a monovinylarene monomer content of $(S/B)_1$ in a range from about 35 wt. % to about 65 wt. % (or from about 45 wt. % to about 55 wt. %), and a conjugated diene monomer content of $(S/B)_2$ in a range from about 70 wt. % to about 90 wt. % (or from about 70 wt. % to about 85 wt. %).

As noted herein, $S_1$ in formula I can be a monoblock of the monovinylarene monomer, wherein $S_1$ can be from about 10 phm to about 45 phm of the copolymer. In these and other embodiments, $S_1$ can be a single monoblock of the monovinylarene monomer, or $S_1$ can be two or more monoblocks of the monovinylarene monomer. Accordingly, $S_1$ can be produced by a process comprising any suitable number of monovinylarene monomer charges to result in 10 phm to 45 phm, for example, from 1 to 10 charges, from 1 to 6 charges, from 1 to 3 charges, 1 charge, from 2 to 8 charges, from 2 to 5 charges, from 2 to 3 charges, 2 charges, and the like.

As noted herein, $(S/B)_1$ and $(S/B)_2$ can be, respectively, a mixed block of the conjugated diene monomer and the monovinylarene monomer. Any suitable type of mixed block can be used for $(S/B)_1$ and $(S/B)_2$. In one embodiment, for instance, at least one of $(S/B)_1$ and $(S/B)_2$ can be a tapered mixed block, while in another embodiment, at least one of $(S/B)_1$ and $(S/B)_2$ can be a random mixed block. Such mixed blocks can be produced by any suitable technique. As an example, at least one of $(S/B)_1$ and $(S/B)_2$ can be produced by a process comprising dual monomer charges. Additionally or alternatively, at least one of $(S/B)_1$ and $(S/B)_2$ can be produced by a process comprising pulsed monomer charges.

Conjugated diene monovinylarene block copolymers contemplated herein can comprise polymer chains containing a block structure having formula I:

$$S_1 - (S/B)_1 - (S/B)_2 \qquad \text{(I)}.$$

In certain embodiments, the copolymer can further comprise polymer chains containing a block structure having formula II:

$$S_2 - (S/B)_1 - (S/B)_2 \qquad \text{(II)}.$$

In formula II, $S_2$ can be a monoblock of the monovinylarene monomer, wherein $S_2$ can be from about 5 phm to about 30 phm. In an embodiment, $S_2$ (the monoblock of the monovinylarene monomer in formula II) can be in a range from about 5 phm to about 25 phm, from about 7 phm to about 30 phm, or from about 7 phm to about 28 phm. In another embodiment, $S_2$, based on the conjugated diene monovinylarene block copolymer, can be in a range from about 5 phm to about 22 phm, from about 7 phm to about 22 phm, from about 5 phm to about 18 phm, from about 12 phm to about 25 phm, or from about 14 phm to about 24 phm.

Like $S_1$ in formula I, $S_2$ in formula II can be a single monoblock of the monovinylarene monomer, or $S_2$ can be

two or more monoblocks of the monovinylarene monomer. Hence, $S_2$ can be produced by a process comprising any suitable number of monovinylarene monomer charges to result in 5 phm to 30 phm, for example, from 1 to 10 charges, from 1 to 5 charges, from 1 to 3 charges, 1 charge, and the like.

As would be readily recognized by those of skill in the art, polymer chains containing a block structure having formula I and polymer chains containing a block structure having formula II can result from a first charge of an initiator and styrene monomer, a second charge of initiator and styrene monomer, a mixed charge of styrene and butadiene $(S/B)_1$, and a mixed charge of styrene and butadiene $(S/B)_2$. $S_1$ in formula I encompasses the styrene blocks from the first two charges, while $S_2$ in formula II encompasses the styrene block from the second charge.

Additionally, as would be readily recognized by those of skill in the art, such a composition can be achieved by blending two or more separately prepared polymers, respectively, having polymer chains of formula I and polymer chains of formula II.

In formula I and formula II, $(S/B)_1$ can be a mixed block of the conjugated diene monomer and the monovinylarene monomer, wherein the monovinylarene monomer content can be from about 30 wt. % to about 80 wt. %, based on the total weight of $(S/B)_1$. Yet, in some embodiments, $(S/B)_1$ can be two mixed blocks of the conjugated diene monomer and the monovinylarene monomer having formula III:

$$- (S/B)_{1A} - (S/B)_{1B} - \qquad \text{(III)}.$$

In formula III, the monovinylarene monomer content of $(S/B)_{1A}$ can be from about 30 wt. % to about 80 wt. % of $(S/B)_{1A}$, and the monovinylarene monomer content of $(S/B)_{1B}$ can be from about 30 wt. % to about 80 wt. %. In some embodiments, the monovinylarene monomer content in $(S/B)_{1A}$ often can be in a range from about 40 wt. % to about 80 wt. %, from about 40 wt. % to about 70 wt. %, or from about 40 wt. % to about 60 wt. %. Likewise, but independently, the monovinylarene monomer content in $(S/B)_{1B}$ often can be in a range from about 40 wt. % to about 80 wt. %, from about 35 wt. % to about 60 wt. %, or from about 40 wt. % to about 60 wt. %.

Respectively, $(S/B)_{1A}$ and $(S/B)_{1B}$ can be a mixed block of the conjugated diene monomer and the monovinylarene monomer. Any suitable type of mixed block can be used for $(S/B)_{1A}$ and $(S/B)_{1B}$. In one embodiment, for instance, at least one of $(S/B)_{1A}$ and $(S/B)_{1B}$ can be a tapered mixed block, while in another embodiment, at least one of $(S/B)_{1A}$ and $(S/B)_{1B}$ can be a random mixed block. Such mixed blocks can be produced by any suitable technique. As an example, at least one of $(S/B)_{1A}$ and $(S/B)_{1B}$ can be produced by a process comprising dual monomer charges. Additionally or alternatively, at least one of $(S/B)_{1A}$ and $(S/B)_{1B}$ can be produced by a process comprising pulsed monomer charges.

Conjugated diene monovinylarene block copolymers contemplated herein can comprise polymer chains containing a block structure having formula I:

$$S_1 - (S/B)_1 - (S/B)_2 \qquad \text{(I)}.$$

As described herein, the copolymer optionally can comprise polymer chains containing a block structure having formula II, and additionally or alternatively, $(S/B)_1$ optionally can be two mixed blocks of the conjugated diene monomer and the monovinylarene monomer having formula III. In these and other embodiments, the copolymer can further comprise polymer chains containing a block structure having formula IA and/or formula IIA:

$$S_1 - (S/B)_1 - (S/B)_2 - S_{T1} \qquad \text{(IA)}$$

$$S_2 - (S/B)_1 - (S/B)_2 - S_{T2} \qquad \text{(IIA)}.$$

In formula IA and IIA, $S_{T1}$ and $S_{T2}$ independently can be monoblocks of the monovinylarene monomer, wherein $S_{T1}$ and $S_{T2}$ independently can be from about 0.5 phm to about 5 phm of the copolymer in some embodiments. For instance, $S_{T1}$ and $S_{T2}$ independently can be in a range from about 0.5 phm to about 4.5 phm, from about 1 phm to about 5 phm, or from about 1 phm to about 4 phm. However, in other embodiments, the terminal styrene blocks can be larger, such as with $S_1$. In these embodiments, $S_{T1}$ and $S_{T2}$ independently can be in a range from about 10 phm to about 45 phm, from about 20 phm to about 40 phm, or from about from about 25 phm to about 38 phm.

In another embodiment, a kink-resistant conjugated diene monovinylarene block copolymer in accordance with this invention can comprise from about 35 phm to about 70 phm monovinylarene monomer, and can comprise polymer chains with the following structures:

1) X-X;
2) X-Y; and
3) Y-Y; wherein

X is: $S^1$ - $S^2$ - $(S/B)^1$ - $(S/B)^2$ - $T^1$ - ; and
Y is: $S^2$ - $(S/B)^1$ - $(S/B)^2$ - $T^1$ -.

In these formulas, $S^1$ and $S^2$ can be monoblocks of the monovinylarene monomer, wherein a total weight of $S^1$ and $S^2$ can be from about 17 wt. % to about 58 wt. % (or from about 35 wt. % to about 45 wt. %) of X, and $S^2$ can be from about 11 wt. % to about 30 wt. % (or from about 14 wt. % to about 26 wt. %) of Y. $(S/B)^1$ can be a mixed block of the conjugated diene monomer and the monovinylarene monomer, wherein the monovinylarene monomer content of $(S/B)^1$ can range from about 30 wt. % to about 80 wt. %; $(S/B)^2$ can be a mixed block of the conjugated diene monomer and the monovinylarene monomer, wherein the monovinylarene monomer content of $(S/B)^2$ can range from about 30 wt. % to about 80 wt. %; and $T^1$ can be a mixed block of the conjugated diene monomer and the monovinylarene monomer, wherein the conjugated diene monomer content of $T^1$ can be at least about 70 wt. %, or a monoblock of the conjugated diene monomer, wherein the conjugated diene monomer content of $T^1$ is 100 wt. %. Further, $T^1$ can be from about 10 to about 30 wt. % of X, and $T^1$ can be from about 14 to about 30 wt. % of Y. Additionally, the copolymer can be further characterized by a kink resistance of tubing produced from the copolymer of less than or equal to about 32 mm, when tested in accordance with DIN EN 13868.

Generally, the features of any of these kink-resistant copolymers (e.g., the phm monovinylarene content in the overall copolymer, $S^1$, $S^2$, $(S/B)^1$, $(S/B)^2$, $T^1$, and the kink resistance of the copolymer, among others) are independently described herein, and these features can be combined in any combination to further describe the disclosed kink-resistant copolymers. As would be recognized by those of skill in the art, X and Y represent uncoupled polymer chains, whereas X-X, X-Y, and Y-Y represent coupled polymer chains.

Consistent with certain embodiments of this invention, the monovinylarene monomer content of these kink-resistant block copolymers often can be in a range from about 35 phm to about 70 phm, from about 40 phm to about 70 phm, or from about 50 phm to about 70 phm. In further embodiments, the monovinylarene monomer content, based on the conjugated diene monovinylarene block copolymer, can be in a range from about 55 phm to about 69 phm, from about 54 phm to about 68 phm, or from about 57 phm to about 67 phm. The abbreviation "phm" means parts by weight per hundred parts of total monomer in the copolymer.

As disclosed herein, $S^1$ and $S^2$ can be monoblocks of the monovinylarene monomer, wherein a total weight of $S^1$ and $S^2$ can range from about 17 wt. % to about 58 wt. % (or from about 35 wt. % to about 45 wt. %) of X, and $S^2$ can range from about 11 wt. % to about 30 wt. % (or from about 14 wt. % to about 26 wt. %) of Y. In one embodiment, the total $S^1$ and $S^2$ content of X can fall within a range from about 20 wt. % to about 50 wt. %, or from about 30 wt. % to about 45 wt. %, while in another embodiment, the total $S^1$ and $S^2$ content of X can fall within a range from about 35 wt. % to about 43 wt. %, or from about 37 wt. % to about 43 wt. % (total weight of $S^1$ and $S^2$, based on the total weight of X). The amount of $S^2$ in Y typically can be within a range from about 12 wt. % to about 27 wt. %; alternatively, from about 16 wt. % to about 24 wt. %; or alternatively, from about 17 wt. % to about 24 wt. % (weight of $S^2$, based on the total weight of Y).

In an embodiment, the monovinylarene monomer content of $(S/B)^1$ can be in a range from about 30 wt. % to about 80 wt. %, from about 40 wt. % to about 75 wt. %, or from about 40 wt. % to about 70 wt. %. In another embodiment, the monovinylarene monomer content of $(S/B)^1$, based on the weight of $(S/B)^1$, can be in a range from about 35 wt. % to about 65 wt. %, from about 35 wt. % to about 60 wt. %, or from about 35 wt. % to about 50 wt. %.

In an embodiment, the monovinylarene monomer content of $(S/B)^2$ can be in a range from about 30 wt. % to about 80 wt. %, from about 40 wt. % to about 75 wt. %, or from about 45 wt. % to about 75 wt. %. In another embodiment, the monovinylarene monomer content of $(S/B)^2$, based on the weight of $(S/B)^2$, can be in a range from about 40 wt. % to about 70 wt. %, from about 40 wt. % to about 65 wt. %, or from about 45 wt. % to about 65 wt. %.

$T^1$ in the polymer chains disclosed hereinabove can be a mixed block of the conjugated diene monomer and the monovinylarene monomer or, alternatively, a monoblock of the conjugated diene monomer. In circumstances where $T^1$ is a mixed block, the conjugated diene monomer content of $T^1$ (in weight percentage) generally can be in one or more of the following non-limiting ranges: from about 70 wt. % to about 95 wt. %, from about 70 wt. % to about 90 wt. %, from about 70 wt. % to about 85 wt. %, from about 72 wt. % to about 90 wt. %, from about 70 wt. % to about 99 wt. %, or from about 70 wt. % to about 99.5 wt. %.

As disclosed herein, $T^1$ can range from about 10 wt. % to about 30 wt. % of X, and $T^1$ can range from about 14 wt. % to about 30 wt. % of Y. In one embodiment, the $T^1$ content of X can fall within a range from about 12 wt. % to about 26 wt. %, or from about 14 wt. % to about 20 wt. %, while in another embodiment, the $T^1$ content of X can fall within a range from about 13 wt. % to about 18 wt. %, or from about 13 wt. % to about 16 wt. % (weight of $T^1$, based on the total weight of X). The amount of $T^1$ in Y typically can be within a range from about 16 wt. % to about 26 wt. %;

alternatively, from about 16 wt. % to about 22 wt. %; or alternatively, from about 17 wt. % to about 21 wt. % (weight of $T^1$, based on the total weight of Y).

In an embodiment of this invention, the conjugated diene monovinylarene block copolymer can be an uncoupled conjugated diene monovinylarene block copolymer. Uncoupled block copolymers often can be referred to in the art as terminated or quenched copolymers. In further embodiments, the conjugated diene monovinylarene block copolymer can be an uncoupled unimodal conjugated diene monovinylarene block copolymer, or alternatively, the block copolymer can be an uncoupled multimodal conjugated diene monovinylarene block copolymer.

In yet another embodiment of this invention, the conjugated diene monovinylarene block copolymer can be a coupled conjugated diene monovinylarene block copolymer. Further, the coupled conjugated diene monovinylarene block copolymer can be a coupled unimodal conjugated diene monovinylarene block copolymer or a coupled multimodal conjugated diene monovinylarene block copolymer. In some embodiments, the block copolymer can be produced by coupling at least two different living polymer chains having been produced by at least two separate charges of initiator. Coupling can be accomplished by any method known to those of skill in the art.

In an embodiment, the conjugated diene monovinylarene block copolymer can comprise at least 3 blocks, or alternatively, at least 4 blocks, or at least 5 blocks. For example, the conjugated diene monovinylarene block copolymer can comprise from 3 to 10 blocks, from 4 to 7 blocks, or from 4 to 5 blocks, and so forth. Any blocks in addition to those specified in the formulas for block structures described hereinabove can be selected from any combination of conjugated diene monoblocks, monovinylarene monoblocks, or conjugated diene monovinylarene mixed blocks. Any additional mixed block, for instance, independently can be a tapered mixed block or a random mixed block.

Optionally, the conjugated diene monovinylarene block copolymer can be hydrogenated, although this is not a requirement. In one embodiment, for instance, the block copolymer can be partially hydrogenated, while in another embodiment, the block copolymer can be fully hydrogenated.

Various monovinylarene monomers and conjugated diene monomers can be used to form suitable conjugated diene monovinylarene block copolymers. As described herein, the monovinylarene monomer often can contain from 8 to 18 carbon atoms (e.g., the monovinylarene monomer can be styrene or methylstyrene), and the conjugated diene monomer can contain from 4 to 12 carbon atoms (e.g., the conjugated diene can be isoprene or 1,3-butadiene). Accordingly, in a particular embodiment disclosed herein, the conjugated diene monovinylarene block copolymer can comprise a styrene butadiene block copolymer (SBC).

The block copolymers can be produced using any suitable polymerization process using various types of polymerization reactors, polymerization reactor systems, and polymerization reaction conditions, as recognized by those of skill in the art. While not being limited thereto, general information on processes for producing conjugated diene monovinylarene block copolymers that can be employed in various embodiments of this invention are described in U.S. Patent Nos. 3,639,517, 6,096,828, 6,420,486, 6,444,755, 6,835,778, 7,037,980, 7,193,014, 7,875,678, 8,415,429, and 8,933,171, the disclosures of which are incorporated herein by reference in their entirety; and U.S. Patent Publication Nos. 2006/0089457 and 2007/0173605, the disclosures of which are incorporated herein by reference in their entirety.

An illustrative process for producing certain block copolymers described herein can comprise contacting:

(i) a first initiator charge and a first charge of the monovinylarene monomer and allowing polymerization to occur until minimal free monomer is present; thereafter contacting all products of step (i) with

(ii) a second initiator charge and a second charge of the monovinylarene monomer and allowing polymerization to occur until minimal free monomer is present; thereafter contacting all products of step (ii) with

(iii) a first mixture of the monovinylarene monomer and the conjugated diene monomer and allowing polymerization to occur until minimal free monomer is present; thereafter contacting all products of step (iii) with

(iv) a second mixture of the monovinylarene monomer and the conjugated diene monomer and allowing polymerization to occur until minimal free monomer is present; thereafter contacting all products of step (iv) with

(v) a third mixture of the monovinylarene monomer and the conjugated diene monomer and allowing polymerization to occur until minimal free monomer is present; thereafter contacting all products of step (v) with

(vi) a coupling agent.

In this process, and optionally, at least one step in the process can comprise polymerization in the presence of a modifier. In these and other embodiments, the modifier can comprise any suitable modifier, typically a polar organic compound, non-limiting examples of which can include a potassium alkoxide, a sodium alkoxide, a metal alkoxide or phenolate, a tertiary amine, an ether (e.g., THF, diglyme, etc.), a thioether, and the like, as well as a mixture or combination thereof. In a particular embodiment, the modifier can comprise dimethyl ether, diethyl ether, ethyl methyl ether, ethyl propyl ether, di-n-propyl ether, di-n-octyl ether, anisole, dioxane, 1,2-dimethoxyethane, 1,2-diethoxypropane, dibenzyl ether, diphenyl ether, 1,2-dimethoxybenzene, tetrahydrofuran (THF), potassium tert-amylate (KTA), dimethyl sulfide, diethyl sulfide, di-n-propyl sulfide, di-n-butyl sulfide, methyl ethyl sulfide, dimethylethylamine, tri-n-ethylamine, tri-n-propylamine, tri-n-butylamine, trimethylamine, triethylamine, tetramethylethylenediamine, tetraethylethylenediamine, N,N-di-methylaniline, N-methyl-N-ethylaniline, N-methylmorpholine, and the like, as well as mixtures or combinations thereof. When present, the modifier (e.g., THF) often can be utilized at a molar ratio of the modifier to total monomer of less than about 1:30, less than about 1:50, less than 1:100, or less than 1:500. Representative non-limiting ranges for the modifier:monomer molar ratio include the following: from about 1:100,000 to about 1:50, from about 1:10,000 to about 1:100, from about 1:10,000 to about 1:500, or from about 1:5,000 to about 1:500, and the like.

As described herein, the processes for producing block copolymers are conducted in the presence of an initiator. Suitable initiators are well known to those of skill in the art, such as alkali metal hydrocarbons, a representative example of which is n-butyl lithium. Each initiator can be either the same or different; for instance, the second initiator charge can be the same as or different from the first charge. The amount of initiator employed can depend on many factors, but typically can be in the range from about 0.01 phm to about 1 phm, or from about 0.01 phm to about 0.5 phm, or from about 0.01 phm to about 0.2 phm (phm is parts by weight per hundred parts of total monomer in the copolymer). In a further embodiment, an additional initiator charge can be used in at least one of steps (iii) to (v), such as, an additional initiator charge in step (iii); additionally or alternatively, an additional initiator charge in step (iv); additionally or alternatively, an additional initiator charge in step (v).

As would be readily recognized by those of skill in the art, the steps in these processes can produce block copolymers with polymer chains containing a block structure having formula I, formula II, and/or formula III.

The polymerization process can be conducted in any suitable hydrocarbon diluent at any suitable polymerization temperature, such as in the range of from about -10 °C to about 150 °C, of from about 10 °C to about 125 °C, at a pressure sufficient to maintain the reaction mixture substantially in the liquid phase. Illustrative hydrocarbon diluents can include, but are not limited to, pentane, hexane, octane, cyclopentane, cyclohexane, and the like, as well as mixtures or combinations thereof. Often, the polymerization process can be conducted in the substantial absence of oxygen and water, and more often, under an inert gas atmosphere. Moreover, as noted herein, each charge of monomer or mixture of monomers can be polymerized to substantial completion, before a subsequent charge of monomer or mixture of monomers (with or without initiator) is commenced.

In step (vi), after polymerization is complete, a coupling agent can be added. Suitable coupling agents can include di- or multivinylarene compounds, di- or multiepoxides, di- or multiisocyanates, di- or multiimines, di- or multialdehydes, di- or multiketones, alkoxytin compounds, di- or multihalides (e.g., silicon halides and halosilanes), mono-, di-, or multianhydrides, di- or multiesters (e.g., esters of monoalcohols with polycarboxylic acids, esters of monohydric alcohols with dicarboxylic acids, esters of monobasic acids with polyalcohols such as glycerol), and the like, and as well as any mixture or combination thereof. Other suitable multifunctional coupling agents can include epoxidized natural source oils, such as epoxidized soybean oil, epoxidized linseed oil, and the like, as well as combinations thereof. The amount of the coupling agent employed can depend on many factors, but typically can be in the range from about 0.1 phm to about 20 phm, from about 0.1 phm to about 5 phm, or from about 0.1 phm to about 2 phm.

Whether coupling or not, the termination of the polymerization reaction can be accomplished using any suitable deactivating agent, illustrative examples of which can include water, carbon dioxide, an alcohol, a phenol, a mono- or di-carboxylic acid, and the like, and combinations thereof.

Another process for producing a kink-resistant conjugated diene monovinylarene block copolymer comprising from about 35 phm to about 70 phm monovinylarene monomer is provided in accordance with this invention. This process can comprise sequentially contacting under polymerization conditions:

(i) a first initiator charge and a first charge of the monovinylarene monomer;
(ii) a second initiator charge and a second charge of the monovinylarene monomer;
(iii) a first dual charge of the monovinylarene monomer and the conjugated diene monomer, wherein the monovinylarene monomer content of the first dual charge is from about 30 wt. % to about 80 wt. %;
(iv) optionally, a second dual charge of the monovinylarene monomer and the conjugated diene monomer, wherein the monovinylarene monomer content of the second dual charge is from about 30 wt. % to about 80 wt. %;
(v) a final charge of the monovinylarene monomer and the conjugated diene monomer, wherein the conjugated diene monomer content is at least about 70 wt. %, or a final charge of the conjugated diene monomer, wherein the conjugated diene monomer content is 100 wt. %; and
(vi) a coupling agent;

Generally, the first charge and the second charge can comprise a total of from about 10 phm to about 45 phm of the monovinylarene monomer, and the kink resistance of tubing produced from the copolymer and tested in accordance with DIN EN 13868 can be less than or equal to about 32 mm The techniques used for sequentially contacting and appropriate polymerization conditions would be readily recognized by those of skill in the art in view of this disclosure and the examples provided hereinbelow.

In further embodiments, the process can include (iv), that is, the process can include the second dual charge. Moreover, any kink-resistant block copolymers produced in accordance with the disclosed processes are encompassed herein.

For example, and in accordance with embodiments of this invention, a kink-resistant conjugated diene monovinylarene block copolymer comprising from about 35 phm to about 70 phm monovinylarene monomer can be formed by the following charge sequence:

$$i_1 - S_J - i_2 - S_K - (S/B)_J - (S/B)_K - T - CA \qquad (A);$$

wherein:

$i_1$ is a first initiator charge;
$S_J$ is a first charge of the monovinylarene monomer;
$i_2$ is a second initiator charge;
$S_K$ is a second charge of the monovinylarene monomer;
$(S/B)_J$ is a first dual charge of the conjugated diene monomer and the monovinylarene monomer, wherein the monovinylarene monomer content of $(S/B)_J$ is from about 30 wt. % to about 80 wt. %;
$(S/B)_K$ is a second dual charge of the conjugated diene monomer and the monovinylarene monomer, wherein the monovinylarene monomer content of $(S/B)_K$ is from about 30 wt. % to about 80 wt. %;
T is a final charge of the conjugated diene monomer and the monovinylarene monomer, wherein the conjugated diene monomer content of T is at least about 70 wt. %, or a final charge of the conjugated diene monomer, wherein the conjugated diene monomer content of T is 100 wt. %; and
CA is a coupling agent charge.

Generally, the first charge and the second charge can comprise a total of from about 10 phm to about 45 phm of the monovinylarene monomer, and the kink resistance of tubing produced from the copolymer and tested in accordance with DIN EN 13868 can be less than or equal to about 32 mm.

In these and other embodiments, the kink-resistant copolymer can comprise from about 40 phm to about 70 phm monovinylarene monomer, from about 50 phm to about 70 phm monovinylarene monomer, from about 54 phm to about 68 phm monovinylarene monomer, or from about 57 phm to about 67 phm monovinylarene monomer. As disclosed herein, the abbreviation "phm" means parts by weight per hundred parts of total monomer in the copolymer.

While not being limited thereto, the first charge of monovinylarene monomer can comprise from about 8 phm to about 24 phm monovinylarene monomer, from about 10 phm to about 20 phm monovinylarene monomer, from about 10 phm to about 20 phm monovinylarene monomer, or from about 12 phm to about 22 phm monovinylarene monomer. Similarly, the total amount of the first and second charge of monovinylarene monomer can comprise from about 15 phm to about 45 phm monovinylarene monomer, from about 20 phm to about 45 phm monovinylarene monomer, from about 22 phm to about 42 phm monovinylarene monomer, from about 25 phm to about 38 phm monovinylarene monomer, or from about 26 phm to about 36 phm monovinylarene monomer.

In an embodiment, the monovinylarene monomer content of the first dual charge can fall within a range from about 30 wt. % to about 70 wt. %, from about 30 wt. % to about 65 wt. %, from about 35 wt. % to about 65 wt. %, from about 35 wt. % to about 60 wt. %, or from about 35 wt. % to about 50 wt. %. This percentage is based on the weight of monovinylarene monomer in the first dual charge versus the total weight of the first dual charge (monovinylarene monomer plus conjugated diene monomer). Additionally or alternatively, the monovinylarene monomer content of the second dual charge can fall within a range from about 30 wt. % to about 75 wt. %, from about 40 wt. % to about 75 wt. %, from about 40 wt. % to about 70 wt. %, from about 40 wt. % to about 65 wt. %, or from about 45 wt. % to about 65 wt. %. This percentage is based on the weight of monovinylarene monomer in the second dual charge versus the total weight of the second dual charge (monovinylarene monomer plus conjugated diene monomer).

While not being limited thereto, the total of the first dual charge and the second dual charge can comprise from about 25 phm to about 65 phm, from about 30 phm to about 60 phm, from about 38 phm to about 62 phm, from about 40 phm to about 60 phm, from about 43 phm to about 57 phm, or from about 46 phm to about 54 phm. Thus, in some embodiments, approximately half of the total monomer charge (monovinylarene monomer plus conjugated diene monomer) can be charged in these two dual charges (i.e., the first dual charge and the second dual charge).

In some embodiments, the final charge can be a dual charge of the conjugated diene monomer and the monovinylarene monomer, while in other embodiments, the final charge can be a conjugated diene monomer charge. In circumstances where the final charge is a dual charge, the conjugated diene monomer content of the final charge can range, for instance, from about from about 70 wt. % to about 95 wt. %, from about 70 wt. % to about 90 wt. %, from about 70 wt. % to about 85 wt. %, from about 70 wt. % to about 99 wt. %, or from about 70 wt. % to about 99.5 wt. %. This percentage is based on the weight of conjugated diene monomer in the final charge versus the total weight of the final charge (monovinylarene monomer plus conjugated diene monomer).

While not being limited thereto, the final charge can comprise from about 5 phm to about 35 phm, from about 10 phm to about 30 phm, from about 15 phm to about 25 phm, from about 16 phm to about 24 phm, or from about 14 phm to about 21 phm. In terms of only the conjugated diene monomer present in the final charge, the final charge often can comprise from about 8 phm to about 22 phm conjugated diene monomer, from about 10 phm to about 20 phm conjugated diene monomer, from about 10 phm to about 18 phm conjugated diene monomer, or from about 12 phm to about 20 phm conjugated diene monomer.

BLOCK COPOLYMER PROPERTIES, COMPOSITIONS, AND ARTICLES

The conjugated diene monovinylarene block copolymers described herein have an unexpected combination of properties which make them suitable for end-use applications not typically considered for such block copolymers. For instance, these block copolymers can replace flexible PVC in certain end-use applications, such as tubing. These block copolymers also can have any of the polymer properties listed below and in any combination.

Often, the block copolymer can have a kink resistance of tubing produced from the copolymer of less than or equal to about 32 mm, tested in accordance with DIN EN 13868 as described herein. In one embodiment, the kink resistance can be less than or equal to about 30 mm, less than or equal to about 28 mm, or less than or equal to about 24 mm Representative non-limiting ranges for the kink resistance include the following: from about 8 mm to about 32 mm, from about 8 mm to about 30 mm, from about 8 mm to about 26 mm, from about 8 mm to about 24 mm, from about 8 mm to about 20 mm, from about 9 mm to about 20 mm, from about 10 mm to about 32 mm, from about 10 mm to about 28 mm, from about 10 mm to about 24 mm, from about 10 mm to about 22 mm, or from about 10 mm to about 20 mm, and the like.

Likewise and unexpectedly, the block copolymer also can have a re-kink resistance of tubing produced from the copolymer of less than or equal to about 32 mm, less than or equal to about 30 mm, less than or equal to about 28 mm, or less than or equal to about 26 mm Similarly, representative non-limiting ranges for the re-kink resistance include the following: from about 8 mm to about 32 mm, from about 8 mm to about 30 mm, from about 8 mm to about 26 mm, from about 8 mm to about 24 mm, from about 8 mm to about 20 mm, from about 10 mm to about 32 mm, from about 10 mm to about 28 mm, from about 10 mm to about 26 mm, from about 12 mm to about 24 mm, or from about 10 mm to about 22 mm, and the like. The re-kink resistance is tested in accordance with DIN EN 13868 as described herein.

Block copolymers in various embodiments of this invention generally can have a melt flow rate (MFR) of less than or equal to about 25 g/10 min. MFR is determined in accordance with ASTM D1238-13 at 200 °C with a 5 Kg load. Melt flow rates in the range from about 2 to about 25, from about 3 to about 20, from about 4 to about 20, or from about 5 to about 15 g/10 min, are contemplated in other embodiments of this invention. For example, the block copolymer can have a MFR in a range from about 2 to about 20, from about 2 to about 15, from about 3 to about 15, from about 4 to about 18, or from about 5 to about 10 g/10 min.

The Shore A hardness of the block copolymer typically can fall within a range from about 20 to about 95, from about 35 to about 90, or from about 40 to about 90. Other suitable and non-limiting ranges for the Shore A hardness include from about 45 to about 95, from about 50 to about 90, from about 60 to about 90, from about 65 to about 82, from about 60 to about 85, from about 60 to about 80, or from about 70 to about 85, and the like.

Given the flexibility and relative softness of the block copolymers disclosed herein, blocking of the resin pellets of the copolymer can be a concern. In embodiments of this invention, the copolymer can have a pellet blocking force - equipment and test procedure are described hereinbelow - of less than or equal to about 120 $lb_f$, less than or equal to about 115 $lb_f$, less than or equal to about 100 $lb_f$, less than or equal to about 90 $lb_f$, or less than or equal to about 70 $lb_f$. The lower limit of the blocking force is generally not determined (i.e., free flowing pellets).

While not required, the block copolymers described herein typically do not contain a plasticizer. Indeed, this can be an advantage over other polymers, such as PVC, which may require relatively large amounts of plasticizers to impart flexibility. However, if desired for a particular end-use, a plasticizer can be combined with the block copolymer at an appropriate loading.

The block copolymer can be modified with any suitable additive or additives, as recognized by those of skill in the art. For instance, the copolymer can be modified with one or more additives selected from an antioxidant, an acid scavenger, an antiblock additive, a slip additive (e.g., a fatty acid amide, erucamide), a colorant, a filler, a polymer processing aid (e.g., a fluoroelastomer), a UV absorber, a UV inhibitor, a lubricant (e.g., a wax, a mineral oil) and the like, as well as any combination thereof. In some embodiments, the copolymer can further comprise an antioxidant; alternatively, an acid scavenger; alternatively, an antiblock additive; alternatively, a slip additive; alternatively, a colorant; alternatively, a filler; alternatively, a polymer processing aid; alternatively, a UV absorber; alternatively, a UV inhibitor; or alternatively, a lubricant. These and other suitable additives and modifiers, which may be added to the copolymers in order to provide beneficial polymer processing or end-use product attributes, are described in Modern Plastics Encyclopedia, Mid-November 1995 Issue, Vol. 72, No. 12; and Film Extrusion Manual - Process, Materials, Properties, TAPPI Press, 1992; the disclosures of which are incorporated herein by reference in their entirety.

Blends or combinations of the block copolymers and another polymer also are encompassed herein. For instance, the second polymer can be a different conjugated diene monovinylarene block copolymer, a styrenic polymer (e.g., a polystyrene, a high impact polystyrene, etc.), or a rubber (a polybutadiene, a polyisoprene, a poly-2-chloro-1,3-butadiene, a poly-1-chloro-1,3-butadiene, an ethylene/propylene terpolymer, a butadiene/acrylonitrile copolymer, a butyl rubber, an acrylic rubber, a styrene/isobutylene/butadiene copolymer, an isoprene/acrylic ester copolymer, etc.), as well as combinations thereof. Other polymer types can be used as blend components as well, such as polyolefins (LDPE, LLDPE, PP, etc.), ethylene/vinyl acetate, and so forth. Additionally, a composition containing the block copolymer of this invention and a second polymer also can contain one or more suitable additives or modifiers, such as those described hereinabove. Multilayer structures (e.g., coextrusions) and/or laminated structures (e.g., adhesive laminations) also can contain the block copolymer, whether as a single layer or in a blend, and with any additives or modifiers suitable for the end-use application of the multilayer or laminated structure.

The block copolymers, blends, multilayer and laminated structures, and so forth, can be formed into various articles of manufacture, and these articles of manufacture can have any thickness suitable for the desired end-use application. Articles which can comprise block copolymers, compositions, multilayer structures, etc., of this invention can include, but are not limited to, a film, a sheet, a bottle or container, a fiber or fabric, an adhesive or coating, a medical device or material, a pipe, or a flexible tube, and the like. Various processes can be employed to form these articles. Non-limiting examples of these processes include injection molding, blow molding, rotational molding, film extrusion, sheet extrusion, profile extrusion, thermoforming, and the like. Such processes and materials are described in Modern Plastics Encyclopedia, Mid-November 1995 Issue, Vol. 72, No. 12; and Film Extrusion Manual - Process, Materials, Properties, TAPPI Press, 1992. In some embodiments of this invention, an article of manufacture can comprise any of the block copolymers described herein (e.g., including blends, compositions, multilayer structures, etc.), can have any of the copolymer properties described herein, and the article of manufacture can be a tubing product, such as flexible tubing for medical applications.

EXAMPLES

Kink resistance testing was performed with an apparatus designed and built in accordance with DIN EN 13868: 2002-11 (Annex A, short term test method), and as described herein. The water line consisted of 3/8-inch (9.525-mm) OD (outside diameter) tubing with flow meters to measure water flow. The groove used to hold the tubing test specimen in place had a depth of 5.05 mm as measured. Tubing test specimens were 16 inches (406.4 mm) in length, and the test speed was kept low enough to avoid over pressurizing the tubing.

The tubing test specimens had an OD of 1/4 inch (6.35 mm), represented by d in the equation below, and a nominal ID (inside diameter) of 1/8 inch (3.175 mm). In reference to the testing diagram in **FIG. 1**, the plate distance was measured as D in mm, and the reported kink resistance (C in the equation below, mm) was calculated according to the following equation:

$$C = D + 2h - d\left(\sqrt{2} - 1\right) = D + 7.5 \ (mm),$$

where D is the measured plate distance at half of the original water flow rate (decrease in flow rate such the initial flow rate through the straight tubing is reduced by 50%), h is the measured groove depth (5.05 mm), and d is the tubing OD (6.35 mm). A manual press capable of providing a force up to 50 $lb_f$ was used to close the gap between plates during testing.

The water temperature was set to ambient conditions of about 25 °C. The rate at which force was applied by the press was manually adjusted to prevent sudden kinking of the tubing during the test (i.e., to prevent the water flow rate from decreasing to zero before the kink resistance could be measured).

Re-kink resistance was measured under the same conditions as those described for kink resistance testing. After the initial kink test was performed, the re-kink resistance was measured by opening the plate distance and repeating the procedure to measure the point at which the water flow rate decreased to half of the flow rate observed at the start of the re-kink test. Typically, the re-kink measurement (C in the equation provided above) was higher than the kink measurement due to the weak spot that formed in the tubing during the original kink measurement.

Shore A hardness testing was performed according to ASTM D2240-05 with a 30 second delay. The Shore A hardness test was performed at ambient conditions on a compression molded 2 inch x 2 inch (50.8 mm x 50.8 mm) square specimen with 1/2 inch (12.7 mm) thickness.

Tensile and elongation property measurements were conducted according to ASTM D638-10 at ambient conditions and at a 20 inches/min speed to ensure the ultimate break strength was determined before reaching the limits of machine extension. Flex testing was performed using an Instron® load frame in accordance with ASTM D790-10 at a crosshead speed of 0.5 inch/min. All test specimens were injection molded.

Haze and light transmission were measured with a BY-Gardner Haze-Guard Plus in accordance with ASTM D1003-11. Test specimens were 4-inch round injection molded specimens having a 0.125 inch thickness.

Hunter color was measured with a Hunter Labs Labscan XE. Test specimens were 4-inch round molded specimens having a 0.125 inch thickness. The color test was performed using a white background.

Melt Flow Rate (MFR) was measured according to modified ASTM D1238-13 using the standard polystyrene conditions (load of 5 kg and temperature of 200° C) with a holding time of 300 seconds.

Pellet blocking force was measured as the shear force required to break a cylindrically-shaped pellet aggregate. To form the pellet aggregate, about 300 grams of pellets were placed in a 3 inch (76.2 mm) ID rigid pipe, a 2.5 kg weight was placed on top of the pellets, and the cylinder and its contents were placed in a forced air oven maintained at 65° C for 90 hours. After cooling to room temperature, the weight and cylinder were removed, then the pellet aggregate was placed in a shearing fixture in an Instron® load frame, and tested in shear. The pellet blocking force (anti-blocking property) of the sample was the pound force ($lb_f$) required to shear the pellet aggregate.

Vicat softening temperatures were measured in accordance with ASTM D1525-09 at a load of 10 N and a ramp rate of 50° C per hour. All test specimens were injection molded.

The following pre-made tubing samples were obtained and used for comparative testing.

1. Tygon® 1: chemical resistant clear PVC tubing - commercially available from McMaster-Carr (Catalog # 5231K144).
2. Tygon® 2: formulation 2375, ultra high chemical resistant PVC tubing - commercially available from McMaster-Carr (Catalog # 5103K32).
3. C-Flex® 50A: thermoplastic elastomer tubing - commercially available from Cole-Parmer.

The following polymer resins were converted into tubing, and the resulting tubing was used for comparative testing.

4. Vector® 8508 SBS block copolymer - commercially available from Dexco Polymers LP - nominal 29 wt. % styrene.
5. Styroflex® 2G66 SB block copolymer - commercially available from Styrolution.
6. Versaflex™ HC MT224 thermoplastic elastomer - commercially available from GLS Thermoplastic Elastomers PolyOne Corp - blend of SEBS and PP.
7. Medalist® MD-575 thermoplastic elastomer - commercially available from Teknor Apex - blend of SEBS and PP.
8. C-Flex® (Lab): Tubing was produced from pellets obtained by chopping thermoplastic elastomer C-Flex® 50A Tubing into pieces - tubing commercially available from Cole-Parmer.
9. K-Resin® SBC XK40 - commercially available from Chevron Phillips Chemical Company LP - nominal 76 wt. % styrene.
10. K-Resin® SBC KR20 - commercially available from Chevron Phillips Chemical Company LP - nominal 62 wt. % styrene.

Examples 4-10 were converted to tubing using single screw extrusion. The extruder was a Vented Extruder Model 2523, 3/4", L/D 25:1 Ratio, from C.W. Brabender® Instruments Inc. The tubing die was an interchangeable die head with 0.25 inch (6.35 mm) OD and 0.125 inch (3.175 mm) ID mandrel tip combinations. The typical temperature profile ranges used for tubing extrusion are provided in **Table I** below.

**Table I.** Extrusion Conditions.

|  | Range | Range |
|---|---|---|
| Rear (feed) | 280°-365° F | (138°-185° C) |
| Middle (transition) | 320°-390° F | (160°-199° C) |
| Front (near die end) | 320°-390° F | (160°-199° C) |
| Die | 280°-365° F | (138°-185° C) |
| Extruder speed | 40-100 RPM | |
| Puller Speed | 15-40 RPM | |

EXAMPLES 1-10

As shown in **Table II,** the tubing samples of Examples 1-3 had acceptable kink resistance, re-kink resistance, and Shore A hardness. The tubing of Example 8 was produced from pellets obtained by chopping the C-Flex® 50A tubing of Example 3 into pieces, and extruding the pieces into tubing using the extrusion system and conditions described above. Example 8 also had acceptable kink resistance, re-kink resistance, and Shore A hardness, and had basically the same properties as that of Example 3. The tubing samples of Examples 4 and 9-10 showed poor kink resistance and, therefore, would not be suitable to replace flexible PVC in medical tubing applications. The Shore A hardness of Example 5 was too high for consideration as a PVC replacement in certain applications.

COMPARATIVE EXAMPLES 11-13; EXAMPLES 14-25

The materials and polymerization processes for Examples 11-25 are as described below. Cyclohexane was dried over activated alumina and stored under nitrogen. n-Butyl lithium initiator (abbreviated BuLi) was used as received at 2 wt. % in cyclohexane. THF was stored over activated alumina under nitrogen. Styrene (S) and butadiene (B) were purified over activated alumina. Epoxidized soybean oil was a 20% solution in $C_6$ purged with and stored under $N_2$.
The polymerizations were performed in a 2-gallon stainless steel reactor using sequential solution polymerization under nitrogen. The reactor was equipped with a jacket for temperature control, a double auger impeller, and baffles. Generally, each block was formed by polymerizing the monomer or mixture of monomers from which the desired units of the block are derived.
Cyclohexane was initially charged to the reactor, followed by THF (0.05 phm). The temperature was adjusted to about 60 °C, and the BuLi initiator was charged, followed by the first charge of styrene monomer (Styrene 1). The second charge contained BuLi and a second charge of styrene monomer (Styrene 2). The next three charges were mixed charges of butadiene and styrene or monoblocks of butadiene (B1+S3, B2+S4, B3+S5) at specified weight percentages of the butadiene (Bd%). Feed lines to the reactor were flushed with about 0.1 kg cyclohexane following each charge. Polymerization was allowed to continue to completion after each monomer or monomer mixture charge. The polymerization temperature ranged from about 38 °C to about 120 °C, and pressure ranged from about 2 psig to about 180 psig. Following completion of the sequential polymerizations, a coupling agent (CA, epoxidized soybean oil) was charged to the reactor, and reacted at about 100 °C for about 15 min. After coupling, the reaction was terminated by adding about 0.2 phm water and adding $CO_2$.
**Table III** and **Table IV** summarize certain production parameters (e.g., charge sequence, composition of each charge) and properties of Examples 11-18 and Examples 19-25, respectively. Tubing specimens of Examples 11-25 were produced from the SBC block copolymers via the extrusion system and conditions described above.
As shown in **Table III** and **Table IV,** Examples 11 and 12 had polymer chains containing three pure butadiene blocks, and had very poor kink resistance. Addition of a small amount of styrene into the butadiene block(s), which resulted in a copolymer with a dual-charged mixed block, improved the kink resistance, as shown by Examples 13-16 (kink resistance ranged from 26 to 36). Unexpectedly, further decreases in the butadiene content in the first two mixed blocks further improved the kink resistance as shown by Examples 17-21 (kink resistance ranged from 14 to 20). Examples 23 and 25 demonstrated a surprisingly good balance of properties desirable for tubing applications.
**Table V** summarizes certain mechanical, optical, and thermal properties of the SBC copolymers of Examples 6 and 20-25.

EXAMPLES 26-29

Unexpectedly, blends of the SBC copolymers described herein with low-styrene content SBS block copolymers also can produce acceptable tubing. **Table VI** summarizes blends (Examples 26-29) of the polymer of Example 4 with the polymer of Example 23. The tubing of Example 23 exhibited better kink resistance than the tubing of Example 4, and moreover, tubing made from blends of the copolymer of Example 23 and the low-styrene SBS block copolymer of Example 4 exhibited significantly better kink resistance than that of Example 4: the kink resistance of the tubing samples of Examples 26-29 ranged from 18 to 25.

EXAMPLES 30-33

Unexpectedly, blends of the SBC copolymers described herein with high-styrene content SBC block copolymers also can produce acceptable tubing. Blends with up to 75% of high-styrene SBC exhibited acceptable kink-resistance. **Table VII** summarizes blends (Examples 30-33) of the polymer of Example 10 with the copolymer of Example 23. The tubing of Example 23 exhibited better kink resistance than the tubing of Example 10, but more interestingly, tubing made from blends of the polymer of Example 23 and the high-styrene SBC block copolymer of Example 10 exhibited significantly better kink resistance than that of Example 10: the kink resistance of the tubing samples of Examples 30-33 ranged from 19 to 21.

Generally, the compositions containing higher styrene content had higher Shore A hardness values as compared to those with lower amounts of styrene. In some end-use applications, a higher Shore A hardness may be desirable.

EXAMPLES 34-39

**Table VIII** summarizes blends of the copolymer of Example 23 with mineral oil. The tubing samples of Examples 34-39 are softer (lower Shore A hardness) than that of Example 23, and exhibited acceptable kink resistance: the kink resistance of the tubing samples of Examples 34-39 ranged from 14 to 23.

COMPARATIVE EXAMPLES 40-41

Examples 40-41 were produced in the same manner as Examples 11-25. The charge sequence for Examples 40-41 was a charge of BuLi initiator, a first charge of styrene monomer (Styrene 1), a second BuLi initiator charge, a second charge of styrene monomer (Styrene 2), a mixed charge of butadiene and styrene (B1+S3) at a specified weight percentage of the butadiene (Bd%), a second mixed charge of butadiene and styrene (B2+S4) at a specified weight percentage of the butadiene (Bd%), and a last charge of butadiene (B3).

As shown in **Table IX,** Examples 40-41 demonstrated a surprisingly good balance of properties desirable for tubing applications - low kink resistance (from 14 to 18), low re-kink resistance, low pellet blocking force, and acceptable Shore A hardness - and were similar in overall good performance to Examples 23 and 25, which utilized a terminal mixed block instead of a terminal butadiene block (prior to coupling).

**Table II.** Comparative Examples 1-10.

| Example No. | 1 | 2 | 3 | 4 | 5 | 6 | 7 | 8 | 9 | 10 |
|---|---|---|---|---|---|---|---|---|---|---|
| Nominal Styrene (phm) | N/T | N/T | N/T | 29 | N/T | N/T | N/T | N/T | 76 | 62 |
| MFR (g/10min) | N/T | N/T | N/T | 12* | N/T | N/T | N/T | 75 | 10 | 6 |
| Kink Resistance (mm) | 23 | 26 | 21 | 35 | 13 | 21 | 23 | 26 | XX | XX |
| Re-Kink Resistance (mm) | 25 | 27 | 24 | 35 | 18 | 24 | 25 | 27 | XX | XX |
| Shore A Hardness | 60 | 66 | 50 | 66 | 84 | 71 | 78 | 51 | 93 | 90 |
| Pellet Blocking ($lb_f$) | N/T | N/T | N/T | 50 | 12 | 4.4 | 7.0 | N/T | 29 | 18 |

Notes: XX = Too rigid for kink resistance test; N/T = Not Tested; Examples 1-3 were commercial tubing samples, while Examples 4-10 were produced using tubing extrusion as described above; * data provided is from a product data sheet.

**Table III.** Examples 11-18.

| Example | 11 | 12 | 13 | 14 | 15 | 16 | 17 | 18 |
|---|---|---|---|---|---|---|---|---|
| BuLi, phm | 0.105 | 0.105 | 0.080 | 0.065 | 0.065 | 0.065 | 0.065 | 0.065 |
| THF, phm | 0.05 | 0.05 | 0.05 | 0.05 | 0.05 | 0.05 | 0.05 | 0.15 |
| Styrene 1, phm | 17 | 16 | 23 | 22 | 23 | 21 | 17 | 15 |
| BuLi, phm | 0.08 | 0.08 | 0.08 | 0.065 | 0.07 | 0.07 | 0.06 | 0.07 |
| Styrene 2, phm | 16 | 15 | 20 | 21 | 21 | 20 | 16 | 14 |
| B1+S3, phm | 20 | 21 | 22 | 21 | 21 | 22 | 26 | 28 |
| Bd% in (B1/S3) | 100% | 100% | 82% | 67% | 67% | 64% | 54% | 50% |
| B2+S4, phm | 21 | 22 | 20 | 19 | 18 | 20 | 24 | 26 |
| Bd% in (B2/S4) | 100% | 100% | 80% | 68% | 61% | 55% | 38% | 42% |
| B3+S5, phm | 26 | 26 | 15 | 17 | 17 | 17 | 17 | 17 |

(continued)

| Example | 11 | 12 | 13 | 14 | 15 | 16 | 17 | 18 |
|---|---|---|---|---|---|---|---|---|
| Bd% in (B3/S5) | 100% | 100% | 100% | 76% | 76% | 76% | 76% | 76% |
| CA, phm | 0.5 | 0.5 | 0.8 | 0.4 | 0.4 | 0.4 | 0.4 | 0.4 |
| Total Styrene, phm | 33 | 31 | 51 | 60 | 62 | 62 | 64 | 62 |
| Kink Resistance (mm) | 54 | 50 | 36 | 26 | 35 | 27 | 15 | 14 |
| Re-Kink Resistance (mm) | N/T | 55 | 42 | 35 | 41 | 35 | 18 | 15 |
| Shore A Hardness | 71 | 59 | 88 | 83 | 84 | 75 | 71 | 64 |
| MFR (g/10 min) | 12.4 | 14.6 | 8.7 | 2.3 | 4.1 | 3.3 | 14.1 | 16.4 |
| Pellet Blocking (lb$_f$) | 142 | 142 | N/T | N/T | N/T | N/T | 62 | 174 |

**Table IV.** Examples 19-25.

| Example | 19 | 20 | 21 | 22 | 23 | 24 | 25 |
|---|---|---|---|---|---|---|---|
| BuLi, phm | 0.065 | 0.071 | 0.036 | 0.063 | 0.064 | 0.065 | 0.065 |
| THF, phm | 0.05 | 0.05 | 0.05 | 0.05 | 0.05 | 0.05 | 0.05 |
| Styrene 1, phm | 17 | 17 | 15 | 17 | 12 | 24 | 15 |
| BuLi, phm | 0.06 | 0.05 | 0.08 | 0.06 | 0.06 | 0.07 | 0.07 |
| Styrene 2, phm | 16 | 16 | 16 | 16 | 21 | 22 | 14 |
| B1+S3, phm | 26 | 22 | 23 | 26 | 26 | 19 | 28 |
| Bd% in (B1/S3) | 58% | 64% | 52% | 54% | 54% | 53% | 50% |
| B2+S4, phm | 24 | 28 | 23 | 24 | 24 | 18 | 26 |
| Bd% in (B2/S4) | 38% | 39% | 52% | 21% | 46% | 39% | 42% |
| B3+S5, phm | 17 | 17 | 23 | 17 | 17 | 17 | 17 |
| Bd% in (B3/S5) | 76% | 76% | 52% | 76% | 76% | 76% | 76% |
| CA, phm | 0.4 | 0.4 | 0.4 | 0.4 | 0.4 | 0.4 | 0.4 |
| Total Styrene, phm | 63 | 62 | 64 | 68 | 62 | 70 | 62 |
| Kink Resistance (mm) | 13 | 16 | 20 | 12 | 15 | 17 | 16 |
| Re-Kink Resistance (mm) | 15 | 20 | 20 | 17* | 17 | 24* | 19 |
| Shore A Hardness | 70 | 72 | 70 | 78 | 70 | 86 | 67 |
| MFI (g/10 min) | 9.1 | 8.6 | 13.2 | 9.9 | 9.1 | 5.7 | 9.8 |
| Pellet Blocking (lb$_f$) | 96 | 44.0 | 144.0 | 37.0 | 45.0 | 5.5 | 96.0 |
| Note: * = Tubing did not recover to original shape. | | | | | | | |

**Table V.** Mechanical, Optical, and Thermal Properties.

| Example | 6 | 20 | 21 | 22 | 23 | 24 | 25 |
|---|---|---|---|---|---|---|---|
| **MECHANICAL PROPERTIES:** | | | | | | | |
| Flexural Modulus kpsi, (1% Secant) | N/T | 18.8 | 17.8 | 44.6 | 15.1 | 80.6 | 10.7 |

(continued)

| Example | 6 | 20 | 21 | 22 | 23 | 24 | 25 |
|---|---|---|---|---|---|---|---|
| **MECHANICAL PROPERTIES:** | | | | | | | |
| Tensile Modulus, kpsi 300% | 0.77 | 0.27 | 0.58 | 0.20 | 0.36 | 0.71 | 0.29 |
| Elongation at Break, % | >350 | >350 | >350 | >350 | >350 | >350 | >350 |
| Tensile Yield Strength, kpsi | None observed | None observed | None observed | 0.66 | None observed | 0.93 | None observed |
| Tensile Break Strength, kpsi | 1.36 | 1.14 | 1.43 | 1.07 | 0.99 | 1.53 | 1.04 |
| **OPTICAL PROPERTIES:** | | | | | | | |
| Hunter +b (yellow) | N/T | 4.6 | 4.8 | 4.2 | 4.7 | 3.6 | 4.5 |
| Haze (%), 125 mil | N/T | 34 | 28 | 44 | 21 | 30 | 45 |
| Light Transmission, (%) | N/T | 85.7 | 80.9 | 86.8 | 83 | 89.1 | 84.7 |
| **THERMAL PROPERTIES:** | | | | | | | |
| Vicat Temperature, °C | N/Y | 42 | 39 | 44 | 42 | 52 | 39 |

**Table VI.** Examples 4, 23, and 26-29.

| Example | 4 | 26 | 27 | 28 | 29 | 23 |
|---|---|---|---|---|---|---|
| Example 23, wt. % | 0 | 25 | 40 | 60 | 75 | 100 |
| Example 4, wt. % | 100 | 75 | 60 | 40 | 25 | 0 |
| MFR (g/10 min) | 12 | 12.7 | 12.5 | 12.1 | 10.2 | 9.4 |
| Kink Resistance (mm) | 35 | 24 | 22 | 25 | 18 | 14 |
| Re-Kink Resistance (mm) | 35 | 34 | 27 | 26 | 24 | 19 |
| Shore A Hardness | 66 | 78 | 77 | 78 | 78 | 78 |

**Table VII.** Examples 10, 23, and 30-33.

| Example | 10 | 30 | 31 | 32 | 33 | 23 |
|---|---|---|---|---|---|---|
| Example 23, wt. % | 0 | 25 | 40 | 60 | 75 | 100 |
| Example 10, wt. % | 100 | 75 | 60 | 40 | 25 | 0 |
| MFR (g/10 min) | 6 | 5.6 | 6.3 | 7.0 | 8.2 | 9.4 |
| Kink Resistance (mm) | XX | 21 | 19 | 19 | 21 | 14 |
| Re-Kink Resistance (mm) | XX | 34 | 29 | 28 | 25 | 19 |

(continued)

| Example | 10 | 30 | 31 | 32 | 33 | 23 |
|---|---|---|---|---|---|---|
| Shore A Hardness | 90 | 90 | 88 | 81 | 80 | 78 |
| Note: XX = Too rigid for kink resistance test. | | | | | | |

**Table VIII.** Examples 23 and 34-39.

| Example | 34 | 35 | 36 | 37 | 38 | 39 | 23 |
|---|---|---|---|---|---|---|---|
| Example 23, wt. % | 94.0 | 97.0 | 98.0 | 99.0 | 99.5 | 99.75 | 100 |
| Mineral oil, wt. % | 6.0 | 3.0 | 2.0 | 1.0 | 0.5 | 0.25 | 0 |
| MFR (g/10 min) | 2.4 | 5.0 | 7.0 | 7.4 | 8.8 | 9.5 | 9.4 |
| Kink Resistance (mm) | 23 | 20 | 15 | 23 | 16 | 14 | 14 |
| Re-Kink Resistance (mm) | 26 | 21 | 19 | 21 | 19 | 20 | 19 |
| Shore A Hardness | 68 | 70 | 71 | 74 | 73 | 72 | 78 |

**Table IX.** Examples 40-41.

| Example | 40 | 41 |
|---|---|---|
| BuLi, phm | 0.065 | 0.065 |
| THF, phm | 0.05 | 0.05 |
| Styrene 1, phm | 17 | 12 |
| BuLi, phm | 0.06 | 0.06 |
| Styrene 2, phm | 16 | 21 |
| B1+S3, phm | 26 | 26 |
| Bd% in (B1/S3) | 54% | 58% |
| B2+S4, phm | 24 | 24 |
| Bd% in (B2/S4) | 38% | 38% |
| B3, phm | 17 | 16 |
| Bd% in B3 | 100% | 100% |
| CA, phm | 0.4 | 0.4 |
| Total Styrene, phm | 60 | 59 |
| Kink Resistance (mm) | 18 | 14 |
| Re-Kink Resistance (mm) | 21 | 19 |
| Shore A Hardness | 74 | 80 |
| MFR (g/10 min) | 3.0 | 4.9 |
| Pellet Blocking (lb$_f$) | 51 | 35 |

Embodiment 1. A conjugated diene monovinylarene block copolymer comprising from about 35 phm to about 75 phm monovinylarene monomer, and comprising polymer chains containing a block structure having formula I:

$$S_1 - (S/B)_1 - (S/B)_2 \qquad \text{(I)};$$

wherein:

$S_1$ is a monoblock of the monovinylarene monomer, wherein $S_1$ is from about 10 phm to about 45 phm of the copolymer;

$(S/B)_1$ is a mixed block of the conjugated diene monomer and the monovinylarene monomer, wherein the monovinylarene monomer content is from about 30 wt. % to about 80 wt. %, based on the total weight of $(S/B)_1$; and

$(S/B)_2$ is a mixed block of the conjugated diene monomer and the monovinylarene monomer, wherein the conjugated diene monomer content is from about 70 wt. % to about 99 wt. %, based on the total weight of $(S/B)_2$; and

wherein a kink resistance of tubing produced from the copolymer and tested in accordance with DIN EN 13868 is less than or equal to about 32 mm.

Embodiment 2. The process or copolymer defined in any one of embodiments 1 or 53-74, wherein the monovinylarene monomer contains from 8 to 18 carbon atoms.

Embodiment 3. The process or copolymer defined in any one of embodiments 1-2 or 53-74, wherein the monovinylarene monomer is styrene.

Embodiment 4. The process or copolymer defined in any one of embodiments 1-3 or 53-74, wherein the conjugated diene monomer contains from 4 to 12 carbon atoms.

Embodiment 5. The process or copolymer defined in any one of embodiments 1-4 or 53-74, wherein the conjugated diene monomer is a butadiene.

Embodiment 6. The process or copolymer defined in any one of embodiments 1-5 or 53-74, wherein the conjugated diene monomer is 1,3-butadiene.

Embodiment 7. The process or copolymer defined in any one of embodiments 1-6 or 53-74, wherein the conjugated diene monovinylarene block copolymer is a styrene butadiene copolymer.

Embodiment 8. The copolymer defined in any one of embodiments 1-7, wherein $S_1$ is in any range disclosed herein, e.g., from about 15 phm to about 43 phm, from about 20 phm to about 40 phm, from about 20 phm to about 35 phm, from about 25 phm to about 35 phm, etc.

Embodiment 9. The copolymer defined in any one of embodiments 1-8, wherein the monovinylarene monomer content is in any range disclosed herein, e.g., from about 40 wt. % to about 80 wt. %, from about 40 wt. % to about 70 wt. %, from about 40 wt. % to about 60 wt. %, etc., based on $(S/B)_1$.

Embodiment 10. The copolymer defined in any one of embodiments 1-9, wherein the conjugated diene monomer content is in any weight percentage range disclosed herein, e.g., from about 70 wt. % to about 95 wt. %, from about 75 wt. % to about 95 wt. %, from about 72 wt. % to about 90 wt. %, etc., based on $(S/B)_2$.

Embodiment 11. The copolymer defined in any one of embodiments 1-10, wherein the copolymer comprises monovinylarene monomer in any range disclosed herein, e.g., from about 46 phm to about 72 phm, from about 52 phm to about 68 phm, from about 58 phm to about 68 phm, from about 54 phm to about 66 phm, etc., based on the weight of the copolymer.

Embodiment 12. The copolymer defined in any one of embodiments 1-11, wherein:

the monovinylarene monomer is from about 57 phm to about 67 phm of the copolymer;

$S_1$ is from about 25 phm to about 38 phm of the copolymer;

the monovinylarene monomer content is from about 40 wt. % to about 60 wt. % of $(S/B)_1$; and

the conjugated diene monomer content is from about 72 wt. % to about 90 wt. % of $(S/B)_2$.

Embodiment 13. The copolymer defined in any one of embodiments 1-12, wherein $S_1$ is two or more monoblocks of the monovinylarene monomer.

Embodiment 14. The copolymer defined in any one of embodiments 1-13, wherein $S_1$ is produced by a process comprising any number of monovinylarene monomer charges disclosed herein, e.g., from 1 to 10 charges, from 2 to 5 charges, 2 charges, etc.

Embodiment 15. The copolymer defined in any one of embodiments 1-14, wherein at least one of $(S/B)_1$ and $(S/B)_2$ is a tapered mixed block.

Embodiment 16. The copolymer defined in any one of embodiments 1-15, wherein at least one of $(S/B)_1$ and $(S/B)_2$ is a random mixed block.

Embodiment 17. The copolymer defined in any one of embodiments 1-16, wherein at least one of $(S/B)_1$ and $(S/B)_2$ is produced by a process comprising dual monomer charges.

Embodiment 18. The copolymer defined in any one of embodiments 1-17, wherein at least one of $(S/B)_1$ and $(S/B)_2$ is produced by a process comprising pulsed monomer charges.

Embodiment 19. The copolymer defined in any one of embodiments 1-18, wherein the copolymer further comprises polymer chains containing a block structure having formula II:

$$S_2 - (S/B)_1 - (S/B)_2 \qquad (II);$$

wherein:

$S_2$ is a monoblock of the monovinylarene monomer, wherein $S_2$ is from about 5 phm to about 30 phm of the copolymer.

Embodiment 20. The copolymer defined in embodiment 19, wherein $S_2$ is in any range disclosed herein, e.g., from about 5 phm to about 25 phm, from about 7 phm to about 30 phm, from about 7 phm to about 25 phm, etc.

Embodiment 21. The copolymer defined in any one of embodiments 19-20, wherein $S_2$ is produced by a process comprising any number of monovinylarene monomer charges disclosed herein, e.g., from 1 to 10 charges, from 1 to 5 charges, 1 charge, etc.

Embodiment 22. The copolymer defined in any one of embodiments 1-21, wherein $(S/B)_1$ is two mixed blocks of the conjugated diene monomer and the monovinylarene monomer having formula III:

$$- (S/B)_{1A} - (S/B)_{1B} - \qquad (III);$$

wherein:

the monovinylarene monomer content is from about 30 wt. % to about 80 wt. % of $(S/B)_{1A}$, and the monovinylarene monomer content is from about 30 wt. % to about 80 wt. % of $(S/B)_{1B}$.

Embodiment 23. The copolymer defined in embodiment 22, wherein the monovinylarene monomer content is in any weight percentage range disclosed herein, e.g., from about 40 wt. % to about 80 wt. %, from about 40 wt. % to about 60 wt. %, from about 35 wt. % to about 65 wt. %, etc., based on $(S/B)_{1A}$.

Embodiment 24. The copolymer defined in any one of embodiments 22-23, wherein the monovinylarene monomer content is in any weight percentage range disclosed herein, e.g., from about 40 wt. % to about 80 wt. %, from about 35 wt. % to about 65 wt. %, from about 40 wt. % to about 60 wt. %, etc., based on $(S/B)_{1B}$.

Embodiment 25. The copolymer defined in any one of embodiments 22-24, wherein at least one of $(S/B)_{1A}$ and $(S/B)_{1B}$ is a tapered mixed block.

Embodiment 26. The copolymer defined in any one of embodiments 22-25, wherein at least one of $(S/B)_{1A}$ and $(S/B)_{1B}$ is a random mixed block.

Embodiment 27. The copolymer defined in any one of embodiments 22-26, wherein at least one of $(S/B)_{1A}$ and $(S/B)_{1B}$ is produced by a process comprising dual monomer charges.

Embodiment 28. The copolymer defined in any one of embodiments 22-27, wherein at least one of $(S/B)_{1A}$ and $(S/B)_{1B}$ is produced by a process comprising pulsed monomer charges.

Embodiment 29. The copolymer defined in any one of embodiments 1-28, wherein the copolymer further comprises polymer chains containing a block structure having formula IA and/or IIA:

$$S_1 - (S/B)_1 - (S/B)_2 - S_{T1} \qquad (IA)$$

$$S_2 - (S/B)_1 - (S/B)_2 - S_{T2} \qquad (IIA);$$

wherein:

$S_{T1}$ and $S_{T2}$ independently are monoblocks of the monovinylarene monomer, wherein $S_{T1}$ and $S_{T2}$ independently are from about 0.5 phm to about 5 phm of the copolymer.

Embodiment 30. The copolymer defined in any one of embodiments 1-29, wherein the copolymer is produced by a process comprising coupling the polymer chains with any coupling agent disclosed herein, e.g., dimethyl silicon dichloride, an epoxidized soy bean oil, etc.

Embodiment 31. The process or copolymer defined in any one of embodiments 1-29 or 53-74, wherein the copolymer is a coupled copolymer.

Embodiment 32. The process or copolymer defined in any one of embodiments 1-31 or 53-74, wherein the copolymer is a multimodal copolymer.

Embodiment 33. The process or copolymer defined in any one of embodiments 1-32 or 53-74, wherein the copolymer is fully hydrogenated.

Embodiment 34. The process or copolymer defined in any one of embodiments 1-32 or 53-74, wherein the copolymer is partially hydrogenated.

Embodiment 35. The process or copolymer defined in any one of embodiments 1-34 or 53-74, wherein the copolymer has a melt flow rate in any range disclosed herein, e.g., from about 3 to about 20, from about 4 to about 18, from about 5 to about 12 g/10 min, etc.

Embodiment 36. The process or copolymer defined in any one of embodiments 1-35 or 53-74, further comprising any additive disclosed herein, e.g., an antioxidant, an acid scavenger, an antiblock additive, a slip additive, a colorant, a filler, a polymer processing aid, a UV inhibitor, a lubricant, etc., or any combination thereof.

Embodiment 37. The process or copolymer defined in any one of embodiments 1-36 or 53-74, wherein the copolymer does not contain a plasticizer.

Embodiment 38. The process or copolymer defined in any one of embodiments 1-37 or 53-74, wherein the kink resistance is in any range disclosed herein, e.g., less than or equal to about 30 mm, from about 8 mm to about 32 mm, from about 8 to about 24 mm, from about 10 mm to about 25 mm, from about 9 mm to about 20 mm, from about 10 mm to about 22 mm, etc.

Embodiment 39. The process or copolymer defined in any one of embodiments 1-38 or 53-74, wherein the tubing has a re-kink resistance in any range disclosed herein, e.g., less than or equal to about 32 mm, from about 8 mm to about 32 mm, from about 10 to about 30 mm, from about 9 mm to about 24 mm, from about 12 mm to about 24 mm, etc.

Embodiment 40. The process or copolymer defined in any one of embodiments 1-39 or 53-74, wherein the copolymer has a Shore A hardness in any range disclosed herein, e.g., from about 20 to about 95, from about 50 to about 90, from about 60 to about 80, etc.

Embodiment 41. The process or copolymer defined in any one of embodiments 1-40 or 53-74, wherein the copolymer has a pellet blocking force in any range disclosed herein, e.g., less than or equal to about 120 $lb_f$, less than or equal to about 115 $lb_f$, less than or equal to about 100 $lb_f$, etc.

Embodiment 42. A composition comprising the copolymer defined in any one of embodiments 1-41 or 53-74 and a second polymer, e.g., a styrene butadiene polymer, a polystyrene, a high impact polystyrene, a polybutadiene, a polyolefin, etc., or any combination thereof.

Embodiment 43. A composition comprising the copolymer defined in any one of embodiments 1-41 or 53-74, a second polymer, and an additive.

Embodiment 44. An article comprising the copolymer or composition defined in any one of embodiments 1-43 or 53-74.

Embodiment 45. An article comprising the copolymer or composition defined in any one of embodiments 1-43 or 53-74, wherein the article is a film, a medical device or material, or an adhesive.

Embodiment 46. A tubing product comprising the copolymer or composition, e.g., prepared from the copolymer or composition, defined in any one of embodiments 1-43 or 53-74.

Embodiment 47. A process for producing the copolymer defined in any one of embodiments 1-41, the process comprising contacting;

(i) a first initiator charge and a first charge of the monovinylarene monomer and allowing polymerization to occur until minimal free monomer is present; thereafter contacting all products of step (i) with

(ii) a second initiator charge and a second charge of the monovinylarene monomer and allowing polymerization to occur until minimal free monomer is present; thereafter contacting all products of step (ii) with

(iii) a first mixture of the monovinylarene monomer and the conjugated diene monomer and allowing polymerization to occur until minimal free monomer is present; thereafter contacting all products of step (iii) with

(iv) a second mixture of the monovinylarene monomer and the conjugated diene monomer and allowing polymerization to occur until minimal free monomer is present; thereafter contacting all products of step (iv) with

(v) a third mixture of the monovinylarene monomer and the conjugated diene monomer and allowing polymerization to occur until minimal free monomer is present; thereafter contacting all products of step (v) with

(vi) a coupling agent.

Embodiment 48. The process defined in embodiment 47, wherein at least one step in the process comprises polymerization in the presence of a modifier.

Embodiment 49. The process defined in embodiment 48, wherein the modifier comprises any modifier disclosed herein, e.g., a potassium alkoxide, a sodium alkoxide, a metal alkoxide or phenolate, a tertiary amine, an ether, etc., as well as any combination thereof.

Embodiment 50. The process defined in embodiment 48 or 49, wherein the modifier comprises THF.

Embodiment 51. The process defined in any one of embodiments 48-50, wherein the modifier is present at any molar ratio of modifier to total monomer disclosed herein, e.g., less than about 1:50, less than about 1:30, from about 1:100,000 to about 1:50, from about 1:10,000 to about 1:500, etc.

Embodiment 52. The process defined in any one of embodiments 47-51, wherein an additional initiator charge is used in at least one of steps (iii) to (v).

Embodiment 53. A process to produce a kink-resistant conjugated diene monovinylarene block copolymer comprising from about 35 phm to about 70 phm monovinylarene monomer, the process comprising sequentially contacting under polymerization conditions:

(i) a first initiator charge and a first charge of the monovinylarene monomer;
(ii) a second initiator charge and a second charge of the monovinylarene monomer;
(iii) a first dual charge of the monovinylarene monomer and the conjugated diene monomer, wherein the monovinylarene monomer content of the first dual charge is from about 30 wt. % to about 80 wt. %;
(iv) optionally, a second dual charge of the monovinylarene monomer and the conjugated diene monomer, wherein the monovinylarene monomer content of the second dual charge is from about 30 wt. % to about 80 wt. %;
(v) a final charge of the monovinylarene monomer and the conjugated diene monomer, wherein the conjugated diene monomer content is at least about 70 wt. %, or a final charge of conjugated diene monomer, wherein the conjugated diene monomer content of is 100 wt. %; and
(vi) a coupling agent;

wherein the first charge and the second charge comprise a total of from about 10 phm to about 45 phm of the monovinylarene monomer; and

wherein a kink resistance of tubing produced from the copolymer and tested in accordance with DIN EN 13868 is less than or equal to about 32 mm.

Embodiment 54. The process defined in embodiment 53, wherein the process includes (iv), i.e., the process includes the second dual charge.

Embodiment 55. A block copolymer produced by the process defined in embodiment 53 or 54.

Embodiment 56. A kink-resistant conjugated diene monovinylarene block copolymer comprising from about 35 phm to about 70 phm monovinylarene monomer, the block copolymer formed by the following charge sequence:

$$i_1 - S_J - i_2 - S_K - (S/B)_J - (S/B)_K - T - CA \qquad (A);$$

wherein:

$i_1$ is a first initiator charge;
$S_J$ is a first charge of the monovinylarene monomer;
$i_2$ is a second initiator charge;
$S_K$ is a second charge of the monovinylarene monomer;
$(S/B)_J$ is a first dual charge of the conjugated diene monomer and the monovinylarene monomer, wherein the monovinylarene monomer content of $(S/B)_J$ is from about 30 wt. % to about 80 wt. %;
$(S/B)_K$ is a second dual charge of the conjugated diene monomer and the monovinylarene monomer, wherein the monovinylarene monomer content of $(S/B)_K$ is from about 30 wt. % to about 80 wt. %;
T is a final charge of the conjugated diene monomer and the monovinylarene monomer, wherein the conjugated diene monomer content of T is at least about 70 wt. %, or a final charge of the conjugated diene monomer, wherein the conjugated diene monomer content of T is 100 wt. %; and
CA is a coupling agent charge;
wherein the first charge and the second charge comprise a total of from about 10 phm to about 45 phm of the monovinylarene monomer; and
wherein a kink resistance of tubing produced from the copolymer and tested in accordance with DIN EN 13868 is less than or equal to about 32 mm.

Embodiment 57. The process or copolymer defined in any one of embodiments 53-56, wherein the conjugated diene monomer content of the final charge is 100%.

Embodiment 58. The process or copolymer defined in any one of embodiments 53-56, wherein the conjugated diene monomer content of the final charge is in any weight percentage range disclosed herein, e.g., from about 70 wt. % to about 95 wt. %, from about 70 wt. % to about 90 wt. %, from about 70 wt. % to about 85 wt. %, from about 70 wt. % to about 99 wt. %, from about 70 wt. % to about 99.5 wt. %, etc.

Embodiment 59. The process or copolymer defined in any one of embodiments 53-58, wherein the final charge comprises an amount of the conjugated diene monomer in any range disclosed herein, e.g., from about 8 phm to about 22 phm, from about 10 phm to about 20 phm, from about 10 phm to about 18 phm, from about 12 phm to about 20 phm, etc.

Embodiment 60. The process or copolymer defined in any one of embodiments 53-59, wherein the copolymer comprises monovinylarene monomer in any range disclosed herein, e.g., from about 40 phm to about 70 phm, from about 50 phm to about 70 phm, from about 54 phm to about 68 phm, from about 57 phm to about 67 phm, etc., based on the weight of the copolymer.

Embodiment 61. The process or copolymer defined in any one of embodiments 53-60, wherein the first charge comprises an amount of the monovinylarene monomer in any range disclosed herein, e.g., from about 8 phm to about 24 phm, from about 10 phm to about 20 phm, from about 10 phm to about 20 phm, from about 12 phm to about 22 phm, etc.

Embodiment 62. The process or copolymer defined in any one of embodiments 53-61, wherein the first charge and the second charge comprise a total amount of the monovinylarene monomer in any range disclosed herein, e.g., from about 15 phm to about 45 phm, from about 20 phm to about 45 phm, from about 22 phm to about 42 phm, from about 25 phm to about 38 phm, from about 26 phm to about 36 phm, etc.

Embodiment 63. The process or copolymer defined in any one of embodiments 53-62, wherein the monovinylarene monomer content of the first dual charge is in any weight percentage range disclosed herein, e.g., from about 35 wt. % to about 65 wt. %, from about 35 wt. % to about 60 wt. %, from about 35 wt. % to about 50 wt. %, etc.

Embodiment 64. The process or copolymer defined in any one of embodiments 53-63, wherein the monovinylarene monomer content of the second dual charge is in any weight percentage range disclosed herein, e.g., from about 40 wt. % to about 70 wt. %, from about 40 wt. % to about 65 wt. %, from about 45 wt. % to about 65 wt. %, etc.

Embodiment 65. A conjugated diene monovinylarene block copolymer comprising from about 35 phm to about 70 phm monovinylarene monomer, and comprising polymer chains with the following structures:

    1) X-X;
    2) X-Y; and
    3) Y-Y; wherein

      X is: $S^1$ - $S^2$ - $(S/B)^1$ - $(S/B)^2$ - $T^1$ - ; and
      Y is: $S^2$ - $(S/B)^1$ - $(S/B)^2$ - $T^1$ - ; wherein:

$S^1$ and $S^2$ are monoblocks of the monovinylarene monomer, wherein a total of $S^1$ and $S^2$ is from about 17 wt. % to about 58 wt. % (or from about 35 wt. % to about 45 wt. %) of X, and $S^2$ is from about 11 wt. % to about 30 wt. % (or from about 14 wt. % to about 26 wt. %) of Y;

$(S/B)^1$ is a mixed block of the conjugated diene monomer and the monovinylarene monomer, wherein the monovinylarene monomer content of $(S/B)^1$ is from about 30 wt. % to about 80 wt. %;

$(S/B)^2$ is a mixed block of the conjugated diene monomer and the monovinylarene monomer, wherein the monovinylarene monomer content of $(S/B)^2$ is from about 30 wt. % to about 80 wt. %; and

$T^1$ is a mixed block of the conjugated diene monomer and the monovinylarene monomer, wherein the conjugated diene monomer content of $T^1$ is at least about 70 wt. %, or a monoblock of the conjugated diene monomer, wherein the conjugated diene monomer content of $T^1$ is 100 wt. %, wherein $T^1$ is from about 10 wt. % to about 30 wt. % of X, and $T^1$ is from about 14 wt. % to about 30 wt. % of Y; and wherein a kink resistance of tubing produced from the copolymer and tested in accordance with DIN EN 13868 is less than or equal to about 32 mm.

Embodiment 66. The copolymer defined in embodiment 65, wherein the copolymer comprises monovinylarene monomer in any range disclosed herein, e.g., from about 40 phm to about 70 phm, from about 50 phm to about 70 phm, from about 54 phm to about 68 phm, from about 57 phm to about 67 phm, etc., based on the weight of the copolymer.

Embodiment 67. The copolymer defined in embodiment 65 or 66, wherein $T^1$ is a monoblock of the conjugated diene monomer.

Embodiment 68. The copolymer defined in embodiment 65 or 66, wherein the conjugated diene monomer content of $T^1$ is in any weight percentage range disclosed herein, e.g., from about 70 wt. % to about 95 wt. %, from about 70 wt. % to about 90 wt. %, from about 70 wt. % to about 85 wt. %, from about 70 wt. % to about 99 wt. %, from about 70 wt. % to about 99.5 wt. %, etc.

Embodiment 69. The copolymer defined in any one of embodiments 65-68, wherein the monovinylarene monomer content of $(S/B)^1$ is in any weight percentage range disclosed herein, e.g., from about 35 wt. % to about 65 wt. %, from about 35 wt. % to about 60 wt. %, from about 35 wt. % to about 50 wt. %, etc.

Embodiment 70. The copolymer defined in any one of embodiments 65-69, wherein the monovinylarene monomer content of $(S/B)^2$ is in any weight percentage range disclosed herein, e.g., from about 40 wt. % to about 70 wt. %, from about 40 wt. % to about 65 wt. %, from about 45 wt. % to about 65 wt. %, etc.

Embodiment 71. The copolymer defined in any one of embodiments 65-70, wherein the total $S^1$ and $S^2$ content of X is in any weight percentage range disclosed herein, e.g., from about 30 wt. % to about 50 wt. %, from about 35 wt. % to about 43 wt. %, from about 37 wt. % to about 43 wt. %, etc.

Embodiment 72. The copolymer defined in any one of embodiments 65-71, wherein the $S^2$ content of Y is in any weight percentage range disclosed herein, e.g., from about 15 wt. % to about 25 wt. %, from about 16 wt. % to about 24 wt. %, from about 17 wt. % to about 24 wt. %, etc.

Embodiment 73. The copolymer defined in any one of embodiments 65-72, wherein the $T^1$ content of X is in any weight percentage range disclosed herein, e.g., from about 12 wt. % to about 26 wt. %, from about 14 wt. % to about 20 wt. %, from about 13 wt. % to about 16 wt. %, etc.

Embodiment 74. The copolymer defined in any one of embodiments 65-73, wherein the $T^1$ content of Y is in any weight percentage range disclosed herein, e.g., from about 16 wt. % to about 26 wt. %, from about 16 wt. % to about 22 wt. %, from about 17 wt. % to about 21 wt. %, etc.

## Claims

1. A process to produce a kink-resistant conjugated diene monovinylarene block copolymer comprising from 35 phm to 70 phm monovinylarene monomer, the process comprising sequentially contacting under polymerization conditions:

   (i) a first initiator charge and a first charge of the monovinylarene monomer;
   (ii) a second initiator charge and a second charge of the monovinylarene monomer;
   (iii) a first dual charge of the monovinylarene monomer and the conjugated diene monomer, wherein the monovinylarene monomer content of the first dual charge is from 30 wt. % to 80 wt. %;
   (iv) optionally, a second dual charge of the monovinylarene monomer and the conjugated diene monomer, wherein the monovinylarene monomer content of the second dual charge is from 30 wt. % to 80 wt. %;
   (v) a final charge of the monovinylarene monomer and the conjugated diene monomer or the conjugated diene monomer, wherein the conjugated diene monomer content of the final charge is at least 70 wt. %; and
   (vi) a coupling agent;

   wherein the first charge and the second charge comprise a total of from 10 phm to 45 phm of the monovinylarene monomer; and
   wherein a kink resistance of tubing produced from the copolymer and tested in accordance with DIN EN 13868 is less than or equal to 32 mm.

2. The process of claim 1, wherein:

   the copolymer comprises from 54 phm to 68 phm monovinylarene monomer;
   the first charge and the second charge comprise a total of from 25 phm to 38 phm monovinylarene monomer; and
   the final charge comprises from 10 phm to 20 phm of the conjugated diene monomer.

3. The process of claim 2, wherein:

   the process includes (iv);
   the monovinylarene monomer content of the first dual charge from 35 wt. % to 60 wt. %; and
   the monovinylarene monomer content of the second dual charge is from 40 wt. % to 65 wt. %.

4. The process of claim 1, wherein:

   the monovinylarene monomer is styrene;
   the conjugated diene monomer is a butadiene; and
   the kink resistance is in a range from 10 to 24 mm.

5. A copolymer produced by the process of claim 4.

6. The process of claim 1, wherein the copolymer has:

> a melt flow rate in a range from 3 to 20;
> a kink resistance in a range from 9 mm to 20 mm; and
> a Shore A hardness in a range from 50 to 90.

7. The process of claim 6, wherein the conjugated diene monovinylarene block copolymer is a styrene butadiene block copolymer.

8. A kink-resistant conjugated diene monovinylarene block copolymer comprising from 35 phm to 70 phm monovinylarene monomer, the block copolymer formed by the following charge sequence:

$$i_1 - S_J - i_2 - S_K - (S/B)_J - (S/B)_K - T - CA \qquad (A);$$

wherein:

> $i_1$ is a first initiator charge;
> $S_J$ is a first charge of the monovinylarene monomer;
> $i_2$ is a second initiator charge;
> $S_K$ is a second charge of the monovinylarene monomer;
> $(S/B)_J$ is a first dual charge of the conjugated diene monomer and the monovinylarene monomer, wherein the monovinylarene monomer content of $(S/B)_J$ is from 30 wt. % to 80 wt. %;
> $(S/B)_K$ is a second dual charge of the conjugated diene monomer and the monovinylarene monomer, wherein the monovinylarene monomer content of $(S/B)_K$ is from 30 wt. % to 80 wt. %;
> T is a final charge of the conjugated diene monomer and the monovinylarene monomer or the conjugated diene monomer, wherein the conjugated diene monomer content of T is at least 70 wt. %; and
> CA is a coupling agent charge;
> wherein the first charge and the second charge comprise a total of from 10 phm to 45 phm of the monovinylarene monomer; and
> wherein a kink resistance of tubing produced from the copolymer and tested in accordance with DIN EN 13868 is less than or equal to 32 mm.

9. The copolymer of claim 8, wherein:

> the copolymer comprises from 57 phm to 67 phm monovinylarene monomer;
> the first charge and the second charge comprise a total of from 26 phm to 36 phm monovinylarene monomer; and
> the final charge comprises from 8 phm to 22 phm of the conjugated diene monomer.

10. The copolymer of claim 9, wherein:

> the monovinylarene monomer content of the first dual charge from 35 wt. % to 50 wt. %;
> the monovinylarene monomer content of the second dual charge is from 45 wt. % to 65 wt. %;
> the monovinylarene monomer is styrene;
> the conjugated diene monomer is a butadiene; and
> the kink resistance is in a range from 10 to 24 mm.

11. A tubing product comprising the copolymer of claim 8, wherein the tubing product has a kink resistance in a range from from 10 to 28 mm.

12. The copolymer of claim 8, wherein the copolymer is a styrene butadiene block copolymer **characterized by**:

> a kink resistance in a range from 9 mm to 20 mm;
> a Shore A hardness in a range from 60 to 80; and
> a pellet blocking force of less than or equal to 120 $lb_f$.

13. A tubing product comprising the copolymer of claim 12.

14. A conjugated diene monovinylarene block copolymer comprising from 35 phm to 70 phm monovinylarene monomer, and comprising polymer chains with the following structures:

1) X-X;
2) X-Y; and
3) Y-Y; wherein

X is: $S^1$ - $S^2$ - $(S/B)^1$ - $(S/B)^2$ - $T^1$ - ; and
Y is: $S^2$ - $(S/B)^1$ - $(S/B)^2$ - $T^1$ - ; wherein:

$S^1$ and $S^2$ are monoblocks of the monovinylarene monomer, wherein a total weight of $S^1$ and $S^2$ is from 35 to 45 wt. % of X, and $S^2$ is from 14 to 26 wt. % of Y;
$(S/B)^1$ is a mixed block of the conjugated diene monomer and the monovinylarene monomer, wherein the monovinylarene monomer content of $(S/B)^1$ is from 30 wt. % to 80 wt. %;
$(S/B)^2$ is a mixed block of the conjugated diene monomer and the monovinylarene monomer, wherein the monovinylarene monomer content of $(S/B)^2$ is from 30 wt. % to 80 wt. %; and
$T^1$ is a mixed block of the conjugated diene monomer and the monovinylarene monomer or a monoblock of the conjugated diene monomer, wherein the conjugated diene monomer content of $T^1$ is at least 70 wt. %, wherein $T^1$ is from 12 to 32 wt. % of X, and $T^1$ is from 16 to 32 wt. % of Y; and
wherein a kink resistance of tubing produced from the copolymer and tested in accordance with DIN EN 13868 is less than or equal to 32 mm.

15. The copolymer of claim 14, wherein $T^1$ is a monoblock of the conjugated diene monomer.

16. The copolymer of claim 14, wherein $T^1$ is a mixed block of the conjugated diene monomer and the monovinylarene monomer, and wherein the conjugated diene monomer content of $T^1$ is in a range from 70 wt. % to 90 wt. %.

17. The copolymer of claim 14, wherein the copolymer is a styrene butadiene block copolymer **characterized by** a kink resistance is in range from 10 to 24 mm, and wherein:

a total weight of $S^1$ and $S^2$ is in a range from 37 to 43 wt. % of X;
$S^2$ is in a range from 17 to 24 wt. % of Y;
$T^1$ is in a range from 14 to 20 wt. % of X; and
$T^1$ is in a range from 16 to 22 wt. % of Y.

18. An article of manufacture comprising the copolymer of claim 17.

19. A composition comprising:

(a) the copolymer of claim 14; and
(b) a second polymer.

20. The composition of claim 19, wherein:

the composition further comprises an additive; and
the second polymer comprises a styrene butadiene polymer, a polystyrene polymer, or a combination thereof.

**Patentansprüche**

1. Verfahren zur Herstellung eines knickfesten Blockcopolymers aus Monovinylaren und konjugiertem Dien, das 35 phm bis 70 phm Monovinylaren-Monomer umfasst, bei dem man

(i) eine erste Initiatorcharge und eine erste Charge des Monovinylaren-Monomers;
(ii) eine zweite Initiatorcharge und eine zweite Charge des Monovinylaren-Monomers;
(iii) eine erste Doppelcharge des Monovinylaren-Monomers und des konjugierten Dien-Monomers, wobei der Gehalt der ersten Doppelcharge an Monovinylaren-Monomer 30 Gew.-% bis 80 Gew.-% beträgt;

(iv) gegebenenfalls eine zweite Doppelcharge des Monovinylaren-Monomers und des konjugierten Dien-Monomers, wobei der Gehalt der zweiten Doppelcharge an Monovinylaren-Monomer 30 Gew.-% bis 80 Gew.-% beträgt;

(v) eine letzte Charge des Monovinylaren-Monomers und des konjugierten Dien-Monomers, wobei der Gehalt der letzten Charge an konjugiertem Dien-Monomer mindestens 70 Gew.-% beträgt; und

(vi) ein Kupplungsmittel

unter Polymerisationsbedingungen nacheinander in Kontakt bringt;

wobei die erste Charge und die zweite Charge insgesamt 10 phm bis 45 phm des Monovinylaren-Monomers umfassen und

wobei die Knickfestigkeit von aus dem Copolymer hergestellten und gemäß DIN EN 13868 geprüften Schläuchen kleiner oder gleich 32 mm ist.

2. Verfahren nach Anspruch 1, wobei

das Copolymer 54 phm bis 68 phm Monovinylaren-Monomer umfasst;

die erste Charge und die zweite Charge insgesamt 25 phm bis 38 phm des Monovinylaren-Monomers umfassen und

die letzte Charge 10 phm bis 20 phm des konjugierten Dien-Monomers umfasst.

3. Verfahren nach Anspruch 2, wobei

das Verfahren (iv) einschließt;

der Gehalt der ersten Doppelcharge an Monovinylaren-Monomer 35 Gew.-% bis 60 Gew.-% beträgt und der Gehalt der zweiten Doppelcharge an Monovinylaren-Monomer 40 Gew.-% bis 65 Gew.-% beträgt.

4. Verfahren nach Anspruch 1, wobei

es sich bei dem Monovinylaren-Monomer um Styrol handelt;

es sich bei dem konjugierten Dien-Monomer um ein Butadien handelt und

die Knickfestigkeit im Bereich von 10 bis 24 mm liegt.

5. Copolymer, hergestellt durch das Verfahren nach Anspruch 4.

6. Verfahren nach Anspruch 1, wobei das Copolymer

eine Schmelzflussrate im Bereich von 3 bis 20;

eine Knickfestigkeit im Bereich von 9 mm bis 20 mm und

eine Shore-A-Härte im Bereich von 50 bis 90 aufweist.

7. Verfahren nach Anspruch 6, wobei es sich bei dem Blockcopolymer aus konjugiertem Dien und Monovinylaren um ein Styrol-Butadien-Blockcopolymer handelt.

8. Knickfestes Blockcopolymer aus konjugiertem Dien und Monovinylaren, umfassend 35 phm bis 70 phm Monovinylaren-Monomer, wobei das Blockcopolymer durch die folgende Chargensequenz gebildet wird:

$$i_1 - S_J - i_2 - S_K - (S/B)_J - (S/B)_K - T - CA \quad (A);$$

wobei

$i_1$ für eine erste Initiatorcharge steht;

$S_J$ für eine erste Charge des Monovinylaren-Monomers steht;

$i_2$ für eine zweite Initiatorcharge steht;

$S_K$ für eine zweite Charge des Monovinylaren-Monomers steht;

$(S/B)_J$ für eine erste Doppelcharge des konjugierten Dien-Monomers und des Monovinylaren-Monomers steht, wobei der Gehalt von $(S/B)_J$ an Monovinylaren-Monomer 30 Gew.-% bis 80 Gew.-% beträgt;

$(S/B)_K$ für eine zweite Doppelcharge des konjugierten Dien-Monomers und des Monovinylaren-Monomers steht, wobei der Gehalt von $(S/B)_K$ an Monovinylaren-Monomer 30 Gew.-% bis 80 Gew.-% beträgt;

$T$ für eine letzte Charge des konjugierten Dien-Monomers und des Monovinylaren-Monomers steht, wobei der Gehalt von $T$ an konjugiertem Dien-Monomer mindestens 70 Gew.-% beträgt; und

$CA$ für eine Kupplungsmittelcharge steht;

wobei die erste Charge und die zweite Charge insgesamt 10 phm bis 45 phm des Monovinylaren-Monomers umfassen und

wobei die Knickfestigkeit von aus dem Copolymer hergestellten und gemäß DIN EN 13868 geprüften Schläuchen kleiner oder gleich 32 mm ist.

9. Copolymer nach Anspruch 8, wobei

das Copolymer 57 phm bis 67 phm Monovinylaren-Monomer umfasst;

die erste Charge und die zweite Charge insgesamt 26 phm bis 36 phm des Monovinylaren-Monomers umfassen und

die letzte Charge 8 phm bis 22 phm des konjugierten Dien-Monomers umfasst.

10. Copolymer nach Anspruch 9, wobei

der Gehalt der ersten Doppelcharge an Monovinylaren-Monomer 35 Gew.-% bis 50 Gew.-% beträgt;

der Gehalt der zweiten Doppelcharge an Monovinylaren-Monomer 45 Gew.-% bis 65 Gew.-% beträgt;

es sich bei dem Monovinylaren-Monomer um Styrol handelt;

es sich bei dem konjugierten Dien-Monomer um ein Butadien handelt und

die Knickfestigkeit im Bereich von 10 bis 24 mm liegt.

11. Schlauchprodukt, umfassend das Copolymer nach Anspruch 8, wobei das Schlauchprodukt eine Knickfestigkeit im Bereich von 10 bis 28 mm aufweist.

12. Copolymer nach Anspruch 8, wobei es sich bei dem Copolymer um ein Styrol-Butadien-Blockcopolymer handelt, das durch

eine Knickfestigkeit im Bereich von 9 mm bis 20 mm;

eine Shore-A-Härte im Bereich von 60 bis 80 und eine Pelletblockkraft kleiner oder gleich 120 $lb_f$ gekennzeichnet ist.

13. Schlauchprodukt, umfassend das Copolymer nach Anspruch 12.

14. Copolymer aus konjugiertem Dien und Monovinylaren, das 35 phm bis 70 phm Monovinylaren-Monomer umfasst und Polymerketten mit den folgenden Strukturen umfasst:

1) X-X;
2) X-Y und
3) Y-Y; wobei

X für $S^1$ - $S^2$ - $(S/B)^1$ - $(S/B)^2$ - $T^1$ - steht und

Y für $S^2$ - $(S/B)^1$ - $(S/B)^2$ - $T^1$ - steht; wobei

$S^1$ und $S^2$ für Monoblöcke des Monovinylaren-Monomers stehen, wobei das Gesamtgewicht von $S^1$ und $S^2$ 35 bis 45 Gew.-% von X beträgt und $S^2$ 14 bis 26 Gew.-% von Y ausmacht;

$(S/B)^1$ für einen gemischten Block des konjugierten Dien-Monomers und des Monovinylaren-Monomers steht, wobei der Gehalt von $(S/B)^1$ an Monovinylaren-Monomer 30 Gew.-% bis 80 Gew.-% beträgt;

$(S/B)^2$ für einen gemischten Block des konjugierten Dien-Monomers und des Monovinylaren-Monomers steht, wobei der Gehalt von $(S/B)^2$ an Monovinylaren-Monomer 30 Gew.-% bis 80 Gew.-% beträgt und

$T^1$ für einen gemischten Block des konjugierten Dien-Monomers und des Monovinylaren-Monomers oder einen Monoblock des konjugierten Dien-Monomers steht, wobei der Gehalt von $T^1$ an konjugiertem Dien-Monomer mindestens 70 Gew.-% beträgt, wobei $T^1$ 12 bis 32 Gew.-% von X ausmacht und $T^1$ 16 bis 32 Gew.-% von Y ausmacht; und

wobei die Knickfestigkeit von aus dem Copolymer hergestellten und gemäß DIN EN 13868 geprüften Schläuchen kleiner oder gleich 32 mm ist.

15. Copolymer nach Anspruch 14, wobei $T^1$ für einen Monoblock des konjugierten Dien-Monomers steht.

16. Copolymer nach Anspruch 14, wobei $T^1$ für einen gemischten Block des konjugierten Dien-Monomers und des Monovinylaren-Monomers steht und wobei der Gehalt von $T^1$ an konjugiertem Dien-Monomer im Bereich von 70 Gew.-% bis 90 Gew.-% liegt.

17. Copolymer nach Anspruch 14, wobei es sich bei dem Copolymer um ein Styrol-Butadien-Blockcopolymer handelt, das durch eine Knickfestigkeit im Bereich von 10 bis 24 mm gekennzeichnet ist, und wobei

das Gesamtgewicht von $S^1$ und $S^2$ im Bereich von 37 bis 43 Gew.-% von X liegt;

$S^2$ im Bereich von 17 bis 24 Gew.-% von Y liegt;
$T^1$ im Bereich von 14 bis 20 Gew.-% von X liegt und $T^1$ im Bereich von 16 bis 22 Gew.-% von Y liegt.

**18.** Erzeugnis, umfassend das Copolymer nach Anspruch 17.

**19.** Zusammensetzung, umfassend:

(a) das Copolymer nach Anspruch 14 und
(b) ein zweites Polymer.

**20.** Zusammensetzung nach Anspruch 19, wobei
die Zusammensetzung ferner ein Additiv umfasst und das zweite Polymer ein Styrol-Butadien-Polymer, ein Polystyrol-Polymer oder eine Kombination davon umfasst.

**Revendications**

**1.** Procédé de production d'un copolymère à blocs diène conjugué-monovinylarène résistant à l'entortillement comprenant de 35 phm à 70 phm de monomère de monovinylarène, le procédé comprenant séquentiellement la mise en contact, dans des conditions de polymérisation de :

(i) une première charge d'initiateur et une première charge du monomère de monovinylarène ;
(ii) une deuxième charge d'initiateur et une deuxième charge du monomère de monovinylarène ;
(iii) une première double charge du monomère de monovinylarène et du monomère de diène conjugué, dans laquelle la teneur en monomère de monovinylarène de la première double charge est de 30 % en poids à 80 % en poids ;
(iv) facultativement, une deuxième double charge du monomère de monovinylarène et du monomère de diène conjugué, dans laquelle la teneur en monomère de monovinylarène de la deuxième double charge est de 30 % en poids à 80 % en poids ;
(v) une charge finale du monomère de monovinylarène et du monomère de diène conjugué ou du monomère de diène conjugué, dans laquelle la teneur en monomère de diène conjugué de la charge finale est d'au moins 70 % en poids ; et
(vi) un agent de couplage ;

dans lequel la première charge et la deuxième charge comprennent un total de 10 phm à 45 phm du monomère de monovinylarène ; et
dans lequel une résistance à l'entortillement d'une tubulure produite à partir du copolymère et testée selon DIN EN 13868 est inférieure ou égale à 32 mm.

**2.** Procédé selon la revendication 1, dans lequel :

le copolymère comprend de 54 phm à 68 phm de monomère de monovinylarène ;
la première charge et la deuxième charge comprennent un total de 25 phm à 38 phm de monomère de monovinylarène ; et
la charge finale comprend de 10 phm à 20 phm du monomère de diène conjugué.

**3.** Procédé selon la revendication 2, dans lequel :

le procédé comprend (iv) ;
la teneur en monomère de monovinylarène de la première double charge étant de 35 % en poids à 60 % en poids ; et
la teneur en monomère de monovinylarène de la deuxième double charge étant de 40 % en poids à 65 % en poids.

**4.** Procédé selon la revendication 1, dans lequel :

le monomère de monovinylarène est un styrène ;
le monomère de diène conjugué est un butadiène ; et
la résistance à l'entortillement est dans une plage de 10 à 24 mm.

**5.** Copolymère produit par le procédé selon la revendication 4.

**6.** Procédé selon la revendication 1, dans lequel le copolymère présente :

un indice de fluidité à chaud dans une plage de 3 à 20 ;
une résistance à l'entortillement dans une plage de 9 mm à 20 mm ; et
une dureté Shore A dans une plage de 50 à 90.

**7.** Procédé selon la revendication 6, dans lequel le copolymère à blocs diène conjugué-monovinylarène est un copolymère à blocs styrène-butadiène.

**8.** Copolymère à blocs diène conjugué-monovinylarène résistant à l'entortillement comprenant de 35 phm à 70 phm de monomère de monovinylarène, le copolymère à blocs étant formé de la séquence de charge suivante :

$$i_1 - S_J - i_2 - S_K - (S/B)_J - (S/B)_K - T - CA \quad (A) ;$$

dans laquelle :

$i_1$ est une première charge d'initiateur ;
$S_J$ est une première charge du monomère de monovinylarène ;
$i_2$ est une deuxième charge d'initiateur ;
$S_K$ est une deuxième charge du monomère de monovinylarène ;
$(S/B)_J$ est une première double charge du monomère de diène conjugué et du monomère de monovinylarène, dans laquelle la teneur en monomère de monovinylarène de $(S/B)_J$ est de 30 % en poids à 80 % en poids ;
$(S/B)_K$ est une deuxième double charge du monomère de diène conjugué et du monomère de monovinylarène, dans laquelle la teneur en monomère de monovinylarène de $(S/B)_K$ est de 30 % en poids à 80 % en poids ;
T est une charge finale du monomère de diène conjugué et du monomère de monovinylarène ou du monomère de diène conjugué, dans laquelle la teneur en monomère de diène conjugué de T est d'au moins 70 % en poids ; et
CA est une charge d'agent de couplage ;
dans lequel la première charge et la deuxième charge comprennent un total de 10 phm à 45 phm du monomère de monovinylarène ; et
dans lequel une résistance à l'entortillement d'une tubulure produite à partir du copolymère et testée selon DIN EN 13868 est inférieure ou égale à 32 mm.

**9.** Copolymère selon la revendication 8, dans lequel :

le copolymère comprend de 57 phm à 67 phm de monomère de monovinylarène ;
la première charge et la deuxième charge comprennent un total de 26 phm à 36 phm de monomère de monovinylarène ; et
la charge finale comprend de 8 phm à 22 phm du monomère de diène conjugué.

**10.** Copolymère selon la revendication 9, dans lequel :

la teneur en monomère de monovinylarène de la première double charge est de 35 % en poids à 50 % en poids ;
la teneur en monomère de monovinylarène de la deuxième double charge est de 45 % en poids à 65 % en poids ;
le monomère de monovinylarène est un styrène ;
le monomère de diène conjugué est un butadiène ; et
la résistance à l'entortillement est dans une plage de 10 à 24 mm.

**11.** Produit de tubulure comprenant le copolymère selon la revendication 8, le produit de tubulure ayant une résistance à l'entortillement dans une plage de 10 à 28 mm.

**12.** Copolymère selon la revendication 8, le copolymère étant un copolymère à blocs styrène-butadiène **caractérisé par** :

une résistance à l'entortillement dans une plage de 9 mm à 20 mm ;
une dureté Shore A dans une plage de 60 à 80 ; et

une force de blocage de granule inférieure ou égale à 120 lb$_f$.

**13.** Produit de tubulure comprenant le copolymère selon la revendication 12.

**14.** Copolymère à blocs diène conjugué-monovinylarène comprenant de 35 phm à 70 phm de monomère de monovinylarène, et comprenant des chaînes de polymère ayant les structures suivantes :

1) X-X ;
2) X-Y ; et
3) Y-Y ; dans lequel

X est : S$^1$ - S$^2$ - (S/B)$^1$ - (S/B)$^2$ - T$^1$ - ; et
Y est : S$^2$ - (S/B)$^1$ - (S/B)$^2$ - T$^1$ - ; dans lequel :
S$^1$ et S$^2$ sont des monoblocs du monomère de monovinylarène, dans lequel un poids total de S$^1$ et S$^2$ est de 35 à 45 % en poids de X, et S$^2$ est de 14 à 26 % en poids de Y ;
(S/B)$^1$ est un bloc mixte du monomère de diène conjugué et du monomère de monovinylarène, dans lequel la teneur en monomère de monovinylarène de (S/B)$^1$ est de 30 % en poids à 80 % en poids ;
(S/B)$^2$ est un bloc mixte du monomère de diène conjugué et du monomère de monovinylarène, dans lequel la teneur en monomère de monovinylarène de (S/B)$^2$ est de 30 % en poids à 80 % en poids ; et
T$^1$ est un bloc mixte du monomère de diène conjugué et du monomère de monovinylarène ou un monobloc du monomère de diène conjugué, dans lequel la teneur en monomère de diène conjugué de T$^1$ est au moins 70 % en poids, dans lequel T$^1$ est de 12 à 32 % en poids de X, et T$^1$ est de 16 à 32 % en poids de Y ; et dans lequel une résistance à l'entortillement d'une tubulure produite à partir du copolymère et testée selon DIN EN 13868 est inférieure ou égale à 32 mm.

**15.** Copolymère selon la revendication 14, dans lequel T$^1$ est un monobloc du monomère de diène conjugué.

**16.** Copolymère selon la revendication 14, dans lequel T$^1$ est un bloc mixte du monomère de diène conjugué et du monomère de monovinylarène, et dans lequel la teneur en monomère de diène conjugué de T$^1$ est dans une plage de 70 % en poids à 90 % en poids.

**17.** Copolymère selon la revendication 14, le copolymère étant un copolymère à blocs styrène-butadiène **caractérisé en ce que** la résistance à l'entortillement est dans la plage de 10 à 24 mm, et dans lequel :

un poids total de S$^1$ et S$^2$ est dans une plage de 37 à 43 % en poids de X ;
S$^2$ est dans une plage de 17 à 24 % en poids de Y ;
T$^1$ est dans une plage de 14 à 20 % en poids de X ; et
T$^1$ est dans une plage de 16 à 22 % en poids de Y.

**18.** Article de fabrication comprenant le copolymère selon la revendication 17.

**19.** Composition comprenant :

(a) le copolymère selon la revendication 14 ; et
(b) un deuxième polymère.

**20.** Composition selon la revendication 19, dans laquelle :

la composition comprend en outre un additif ; et
le deuxième polymère comprend un polymère styrène-butadiène, un polymère de polystyrène, ou une combinaison de ceux-ci.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3639517 A
- US 6096828 A
- US 6420486 B
- US 6444755 B
- US 6835778 B
- US 7037980 B
- US 7193014 B
- US 7875678 B
- US 8415429 B
- US 8933171 B
- US 20060089457 A
- US 20070173605 A

**Non-patent literature cited in the description**

- IUPAC Compendium of Chemical Terminology. 1997
- Modern Plastics Encyclopedia. November 1995, vol. 72
- Film Extrusion Manual - Process, Materials, Properties. TAPPI Press, 1992